(19) Europäisches Patentamt
European Patent Office
Office européen des brevets

(11) **EP 0 991 671 B1**

(12) **EUROPÄISCHE PATENTSCHRIFT**

(45) Veröffentlichungstag und Bekanntmachung des Hinweises auf die Patenterteilung:
**02.04.2003 Patentblatt 2003/14**

(21) Anmeldenummer: **98936365.0**

(22) Anmeldetag: **18.06.1998**

(51) Int Cl.$^7$: **C08F 4/00**, C08F 2/22

(86) Internationale Anmeldenummer:
**PCT/EP98/03697**

(87) Internationale Veröffentlichungsnummer:
**WO 99/000426 (07.01.1999 Gazette 1999/01)**

(54) **VERFAHREN DER RADIKALISCH INITIIERTEN WÄSSRIGEN EMULSIONSPOLYMERISATION ZUR HERSTELLUNG EINER WÄSSRIGEN POLYMERISATDISPERSION**

METHOD FOR AQUEOUS EMULSION POLYMERIZATION INITIATED BY FREE-RADICALS, FOR PRODUCING AN AQUEOUS POLYMER DISPERSION

PROCEDE DE POLYMERISATION PAR EMULSION AQUEUSE INDUITE PAR DES RADICAUX POUR LA FABRICATION D'UNE DISPERSION POLYMERE AQUEUSE

(84) Benannte Vertragsstaaten:
**BE DE FR GB IT NL**

(30) Priorität: **27.06.1997 DE 19727505**
**15.08.1997 DE 19735225**

(43) Veröffentlichungstag der Anmeldung:
**12.04.2000 Patentblatt 2000/15**

(73) Patentinhaber: **BASF AKTIENGESELLSCHAFT**
**67056 Ludwigshafen (DE)**

(72) Erfinder:
- **MORRISON, Bradley, Ronald**
  **D-68167 Mannheim (DE)**
- **MATHAUER, Klemens**
  **D-67061 Ludwigshafen (DE)**
- **FISCHER, Michael**
  **D-67071 Ludwigshafen (DE)**
- **DURANT, Yvon**
  **D-69214 Eppelheim (DE)**

(56) Entgegenhaltungen:
**US-A- 4 581 429** **US-A- 5 322 912**

EP 0 991 671 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Vorliegende Erfindung betrifft ein Verfahren der radikalisch initiierten wäßrigen Emulsionspolymerisation zur Herstellung einer wäßrigen Polymerisatdispersion, bei dem man wenigstens eine ethylenisch ungesättigte Gruppe aufweisende Verbindungen (Monomere) mittels Dispergiermittel in wäßrigem Medium emulgiert und mittels eines radikalischen Polymerisationsinitiators im Beisein eines N-Oxyl-Radikals (eine Verbindung, die wenigstens eine

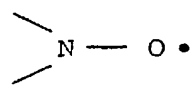

Gruppe aufweist) das sich von einem sekundären Amin ableitet, welches keine Wasserstoffatome an den α-C-Atomen trägt (d.h., die N-Oxyl-Gruppen leiten sich von entsprechenden sekundären Aminogruppen ab), unter Ausbildung einer wäßrigen Polymerisatdispersion polymerisiert. In dieser Schrift sollen vorgenannte N-Oxyl-Radikale als stabile N-Oxyl-Radikale bezeichnet werden.

Wäßrige Polymerisatdispersionen sind fluide Systeme, die als disperse Phase in wäßrigem Dispergiermedium Polymerisatteilchen in stabiler (Lagerstabilität in der Regel ≥ 24 h, normalerweise ≥ 2-3 Tage, meist ≥ 1 Woche) disperser Verteilung befindlich enthalten. Der zahlenmittlere Durchmesser der Polymerisatteilchen beträgt in der Regel 0,01 bis 1 µm.

Ebenso wie Polymerisatlösungen beim Verdampfen des Lösungsmittels, weisen wäßrige Polymerisatdispersionen beim Verdampfen des wäßrigen Dispergiermediums die Eigenschaft auf, Polymerisatfilme zu bilden, weshalb wäßrige Polymerisatdispersionen in vielfacher Weise unmittelbar als Bindemittel, z.B. für Anstrichfarben oder Massen zum Beschichten von Leder, Anwendung finden.

Häufig wird das dispers verteilte Polymerisat aber auch durch Koagulation abgetrennt und als Bestandteil in Polymer Blends zur Modifizierung der mechanischen Eigenschaften verwendet. Dazu wird das aus der wäßrigen Polymerisatdispersion abgetrennte Polymerisat beispielsweise mit anderen Thermoplasten und gegebenenfalls den üblichen Zuschlagstoffen wie Farbmittel, Pigmente, Gleitmittel, Stabilisatoren oder Füllstoffe, extrudiert.

Die Herstellung wäßriger Polymerisatdispersionen erfolgt meist durch radikalisch initiierte wäßrige Emulsionspolymerisation von wenigstens eine ethylenisch ungesättigte Gruppe aufweisenden Verbindungen bei unterhalb 100°C liegenden Temperaturen. Dabei werden die zu polymerisierenden Monomeren, die überwiegend nur wenig wasserlöslich sind, ohne größeren Aufwand, z.B. durch übliches Rühren, unter Zusatz von Dispergiermittel im wäßrigen Medium emulgiert und durch die Einwirkung radikalischer Polymerisationsinitiatoren polymerisiert.

Bei den radikalischen Polymerisationsinitiatoren handelt es sich üblicherweise um in Wasser lösliche Peroxide, Hydroperoxide und/oder Azoverbindungen, die, oberhalb einer bestimmten Temperatur, die in der Regel ≤ 100°C beträgt, in reaktive Radikale zerfallen, die die Polymerisation auslösen.

Der Begriff Emulsion drückt aus, daß die Monomeren und das Wasser als ein System von zwei nur wenig ineinander löslichen Flüssigkeiten vorliegt, in dem die Flüssigkeiten in mehr oder weniger feiner Verteilung vorliegen. Die Kennzeichnung wäßrige Emulsion drückt aus, daß die wäßrige Phase die kontinuierliche Phase bildet. Zur Herstellung einer wäßrigen Monomerenemulsion bedarf es normalerweise des Zusatzes von Dispergiermitteln (z.B. Ullmanns Encyklopädie der technischen Chemie, Bd. 10, 4. Auflage, Verlag Chemie, Weinheim (1975), S. 449), die die unmittelbare Vereinigung von zwei zufällig zusammenstoßenden Monomerentröpfchen in der wäßrigen Emulsion unterbinden und die Stabilität der resultierenden wäßrigen Polymerisatdispersion gewährleisten.

Infolge des geringen Verteilungsaufwandes besteht die bei der radikalischen wäßrigen Emulsionspolymerisation eingesetzte wäßrige Monomerenemulsion üblicherweise hauptsächlich aus Monomerentröpfchen eines Durchmessers > 1 µm.

Wie alle radikalisch initiierten Polymerisationen von wenigstens eine ethylenisch ungesättigte Gruppe aufweisenden Verbindungen weist auch das Verfahren der radikalisch initiierten wäßrigen Emulsionspolymerisation den Nachteil auf, daß das Molekulargewicht der Polymerketten mit dem Polymerisationsumsatz normalerweise nicht zunimmt und daß die Polymerketten des resultierenden Polymerisats in der Regel kein einheitliches Molekulargewicht aufweisen. D.h., das erhältliche Polymerisat ist bezüglich der Eigenschaft Molekulargewicht in der Regel nicht monodispers, sondern weist üblicherweise einen diesbezüglichen Polydispersitätsindex PDI von ≥ 2 auf (PDI = $\overline{M}_w/\overline{M}_n$, mit $\overline{M}_w$ = gewichtsmittleres Molekulargewicht und $\overline{M}_n$ = zahlenmittleres Molekulargewicht), was insbesondere auf Abbruchreaktionen infolge irreversibler Kombination wachsender freier radikalischer Polymerisatkettenenden zurückgeführt wird.

Ein weiterer Nachteil der radikalisch initiierten wäßrigen Emulsionspolymerisation besteht darin, daß ein während der Polymerisation durchgeführter Wechsel der zu polymerisierenden Monomeren in der Regel nicht zu segmentierten Copolymerisaten (Blockpolymerisaten) sondern im Normalfall allenfalls zu dispergierten Kern-Schale-Polymerteilchen führt, deren Kern aus der einen und deren Schale aus der anderen Monomerensorte aufgebaut ist, wobei Kern und Schale im wesentlichen nicht chemisch sondern lediglich physikalisch aneinander gebunden sind.

Aus TRIP Vol. 4, No. 6, June 1996, S. 183 ff, US-A 5,322,912, WO 96/24620, US-A-4,581,429, US-A 5,412,047, EP-A 135 280 sowie aus der älteren Anmeldung DE-A 19602539 ist bekannt, daß die Durchführung von radikalisch initiierten Polymerisationen bei oberhalb 100°C liegenden Temperaturen im Beisein eines stabilen (im wesentlichen nicht initiierend wirkenden) N-Oxyl-Radikals eine gewisse Kontrolle der radikalisch initiierten Polymerisation ermöglicht.

Der zugrunde liegende Wirkmechanismus liegt vermutlich darin begründet, daß die stabilen N-Oxyl-Radikale reaktive radikalische Enden einer wachsenden Polymerisatkette bei erhöhten Temperaturen nicht irreversibel terminieren, sondern lediglich vorübergehend blockieren. Daraus resultiert eine Verringerung der stationären Konzentration wachsender freier radikalischer Polymerisatkettenenden, was die Möglichkeit für einen irreversiblen Abbruch des Kettenwachstums durch Kombination zweier wachsender Polymerisatkettenenden verringert. Dies führt im Mittel zu mit dem Polymerisationsumsatz (im Idealfall linear) wachsenden Polymerisatketten. Letztes bedingt ein mit dem Polymerisationsumsatz (im Idealfall linear) wachsendes mittleres Molekulargewicht des gebildeten Polymerisats mit einem bei 1 liegenden Polydispersitätsindex.

Gemäß US-A 5,322,912, Spalte 10, Zeile 65 ff kommt als Reaktionsmedium für eine solche kontrollierte radikalisch initiierte Polymerisation auch eine Emulsion in Betracht. Weitergehende Angaben zur Durchführung einer solchen radikalisch initiierten Emulsionspolymerisation macht die US-A 5,322,912 nicht. Das gleiche gilt für die DE-A 19602539. Die US-A 5,412,047 empfiehlt in Spalte 18, Zeilen 54 ff für den Fall, daß die radikalisch initiierte Polymerisation in einem mehrphasigen System erfolgt, wie es bei der radikalisch initiierten wäßrigen Emulsionspolymerisation der Fall ist, lediglich, stabile N-Oxyl-Radikale zu verwenden, die in Wasser eine besonders geringe Löslichkeit aufweisen.

Die Verfügbarkeit einer in einfacher Weise durchzuführenden kontrollierten radikalisch initiierten wäßrigen Emulsionspolymerisation zur Herstellung einer wäßrigen Polymerisatdispersion wäre insofern von Vorteil, als sie eine kontrollierte Einstellung des Molekulargewichts des resultierenden, in disperser Verteilung befindlichen, Polymerisats ermöglichen würde. Selbiges bestimmt z.B. Kohäsion und Adhäsion des resultierenden Films der wäßrigen Polymerisatdispersion. Mit zunehmendem Molekulargewicht wächst in der Regel die Kohäsion, ein abnehmendes Molekulargewicht fördert in der Regel die Oberflächenklebrigkeit des Films. Ferner eröffnet sie den unmittelbaren Zugang zu wäßrigen Dispersionen von maßgeschneiderten Blockcopolymerisaten, da die freien radikalischen Polymerisatkettenenden nicht durch Kombination zerstört, sondern lediglich reversibel blockiert werden. D.h., nach Verbrauch einer ersten Monomerensorte kann die Polymerisation bei Zusatz weiterer Monomerensorten fortgesetzt werden.

In Macromolecules 1997, 30, S. 324-326 wird empfohlen, zur Herstellung einer wäßrigen Polymerisatdispersion durch kontrollierte initiierte wäßrige Emulsionspolymerisation letztere so zu realisieren, daß man eine vorgebildete wäßrige Polymerisatdispersion (einen sogenannten Saat-Latex) in ein Polymerisationsgefäß vorlegt und der Vorlage die zu polymerisierenden Monomeren sowie eine hydrophobe Verbindung, die unter der Einwirkung von Wärme in ein stabiles N-Oxyl-Radikal und in einen die Polymerisation initiierenden radikalischen Partner zerfällt, zufügt. Dann überläßt man das Reaktionsgemisch bei Raumtemperatur sich selbst, um sowohl den zu polymerisierenden Monomeren als auch der hydrophoben Verbindung die Diffusion in die Saat-Polymerisatteilchen zu ermöglichen (Quellung). Nach erfolgter Quellung wird durch Temperaturerhöhung (> 100°C) die Polymerisation unter überatmosphärischem Druck durchgeführt. Nachteilig an dieser Verfahrensweise ist, daß sie die Vorabherstellung der vergleichsweise komplizierten hydrophoben Verbindung sowie des äußerst langsamen Quellungsprozesses bedarf. Ferner bedarf es unabdingbar der Vorabherstellung eines Saat-Latex.

Aufgabe der vorliegenden Erfindung war daher, eine vorteilhafter durchzuführende Verfahrensweise einer kontrollierten radikalisch initiierten wäßrigen Emulsionspolymerisation zur Herstellung wäßriger Polymerisatdispersionen zur Verfügung zu stellen.

Demgemäß wurde ein Verfahren der radikalisch initiierten wäßrigen Emulsionspolymerisation zur Herstellung einer wäßrigen Polymerisatdispersion gefunden, bei dem man wenigstens eine ethylenisch ungesättigte Gruppe aufweisende Verbindungen mittels Dispergiermittel in wäßrigem Medium emulgiert und im Beisein eines stabilen N-Oxyl-Radikals radikalisch polymerisiert, das dadurch gekennzeichnet ist, daß man aus einem Gemisch, umfassend

a) die wenigstens eine ethylenisch ungesättigte Gruppe aufweisenden Verbindungen, wenigstens einen radikalischen Polymerisationsinitiator und wenigstens ein stabiles N-Oxyl-Radikal,
oder

b) die wenigstens eine ethylenisch ungesättigte Gruppe aufweisenden Verbindungen und wenigstens eine Verbindungen, die unter der Einwirkung von Wärme in ein stabiles N-Oxyl-Radikal und in einen die Polymerisation initiierenden radikalischen Partner zerfällt,

eine wäßrige Emulsion erzeugt, deren disperse Phase hauptsächlich aus Tröpfchen eines Durchmessers ≤ 500 nm besteht, und die wäßrige Emulsion durch Temperaturerhöhung polymerisiert.

Als erfindungsgemäß geeignete stabile N-Oxyl-Radikale kommen alle diejenigen in Betracht, die in der EP-A 135 280, der älteren Anmeldung DE-A 19651307, der US-A 5,322,912, der US-A 4,581,429, der WO 96/24620, der US-A 5,412,047 sowie der älteren Anmeldung DE-A 19602539 genannt sind.

Solche geeigneten, sich von einem sekundären Amin ableitenden, stabile N-Oxyl-Radikale sind z.B. jene der allgemeinen Formel I

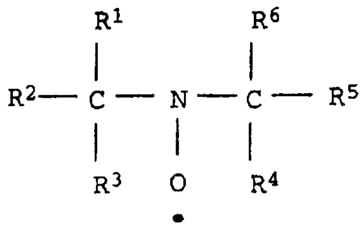 (I),

mit

| | |
|---|---|
| $R^1$,$R^2$,$R^5$ und $R^6$ = | dieselben oder verschiedene gerad- oder verzweigtkettige, gegebenenfalls substituierte Alkylgruppen und |
| $R^3$ und $R^4$ = | dieselben oder verschiedene gerad- oder verzweigtkettige, gegebenenfalls substituierte Alkylgruppen oder |
| $R^3CNCR^4$ = | eine, gegebenenfalls substituierte, zyklische Struktur. |

Als Verbindungen I kommen insbesondere jene in Betracht, die in der EP-A 135 280, der älteren Anmeldung DE-A 19651307, der US-A 5,322,912, der US-A 5,412,047, der US-A 4,581,429, der DE-A 16 18 141, CN-A 1052847, US-A 4,670,131, US-A 5,322,960 sowie der älteren Anmeldung DE-A 19602539 genannt sind.

Beispiele dafür sind jene stabilen N-Oxyl-Radikale der allgemeinen Formel I, bei welchen $R^1$, $R^2$, $R^5$ und $R^6$ für (gleiche oder verschiedene) Methyl-, Ethyl-, n-Propyl-,iso-Propyl-, n-Butyl-, iso-Butyl-, tert.-Butyl-, lineares oder verzweigtes Pentyl-, Phenyl- oder substituierte Gruppen hiervon und $R^3$ und $R^4$ für (gleiche oder verschiedene) Methyl-, Ethyl-, n-Propyl-, iso-Propyl-, n-Butyl-, iso-Butyl-, tert.-Butyl-, lineares oder verzweigtes Pentyl-, substituierte Gruppen hiervon oder gemeinsam mit CNC die zyklische Struktur

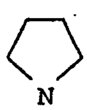 oder 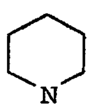 oder 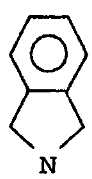 oder 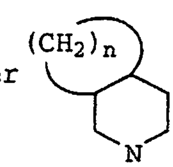 oder 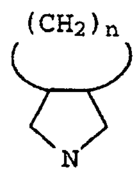

mit n gleich einer ganzen Zahl von 1 bis 10 (häufig 1 bis 6), einschließlich substituierter derartiger zyklischer Strukturen, stehen. Als beispielhafte Vertreter seien 2,2,6,6-Tetramethyl-1-oxyl-piperidin, 2,2,5,5-Tetramethyl-1-oxyl-pyrrolidin und 4-Oxo-2,2,6,6-tetramethyl-1-oxyl-piperidin genannt.

Die stabilen N-Oxyl-Radikale lassen sich aus den entsprechenden sekundären Aminen durch Oxidation, z. B. mit Wasserstoffperoxid, herstellen. In der Regel sind sie als Reinsubstanz darstellbar.

Erfindungsgemäß geeignete stabile N-Oxyl-Radikale sind z.B. solche, deren molale Löslichkeit in Wasser bei 25°C und 1 bar ≤ $10^{-1}$ mol/kg beträgt. D.h., vorgenannte molare Löslichkeit kann auch < $10^{-3}$ mol/kg oder ≤ $10^{-4}$ mol/kg bzw. ≤ $10^{-5}$ mol/kg oder ≤ $10^{-6}$ mol/kg betragen.

Zu den erfindungsgemäß geeigneten stabilen N-Oxyl-Radikalen zählen insbesondere carboxylierte, phosphonierte, sulfonierte und/oder hydroxylierte piperidin- oder pyrrolidin-N-Oxyle und Di-N-Oxyle der nachstehenden allgemeinen Formeln II bis IX:

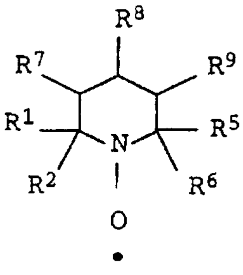
(II),

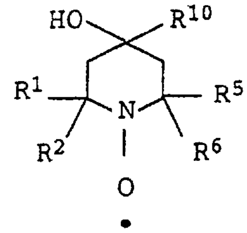
(III),

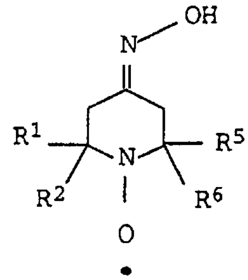
(IV),

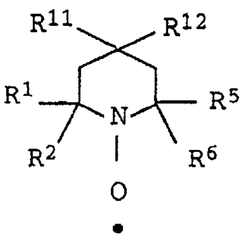
(V),

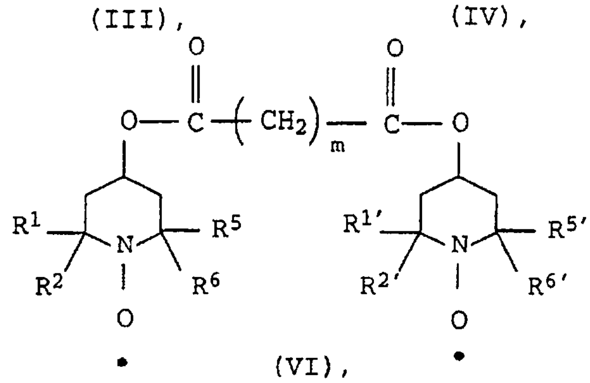
(VI),

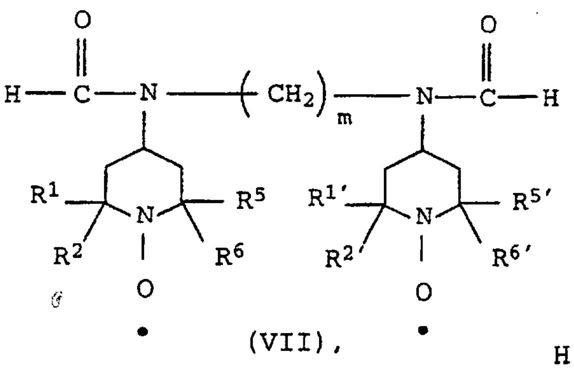
(VII),

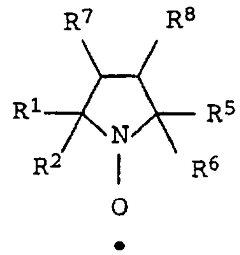
(VIII),

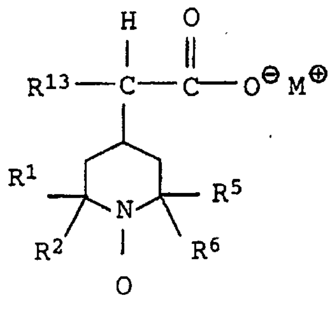
(IX),

mit

m = 2 bis 10,

$R^7$,$R^8$,$R^9$ = unabhängig voneinander

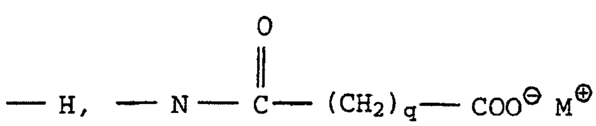
,

$-NH_2$, 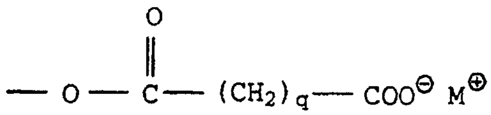 ,

$-COO^{\ominus} M^{\oplus}$, $-SO_3^{\ominus} M^{\oplus}$, $-PO_3^{\ominus} M^{\oplus}$,

$-O-PO_3^{2\ominus} M_2^{\oplus}$, $-O-SO_3^{\ominus} M^{\oplus}$, $-OH$,

$-O-(CH_2-CH_2-O)_q H$

oder

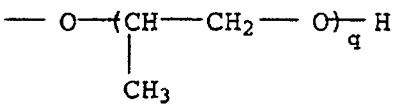 ,

mit der Maßgabe, daß wenigstens einer der vorhandenen Substituenten $R^7$, $R^8$ oder $R^9$ von Wasserstoff verschieden und $M^{\oplus}$ ein Wasserstoff- oder ein Alkalimetallion (insbesondere $K^{\oplus}$ oder $Na^{\oplus}$) ist,

q = eine ganze Zahl von 1 bis 10,

$R^{1'}, R^{2'}, R^{5'}, R^{6'}$ = unabhängig voneinander und unabhängig von $R^1$, $R^2$, $R^5$, $R^6$ dieselben Gruppen wie $R^1$,

$R^{10}$ = $C_1$- bis $C_4$-Alkyl, $-CH=CH_2$, $-C\equiv CH$, $-CN$,

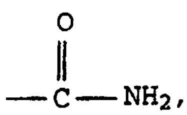, $-COO^{\ominus} M^{\oplus}$, $-COOCH_3$ oder $-COOC_2H_5$,

$R^{11}$ = ein organischer Rest, der wenigstens eine primäre, sekundäre (z.B. $-NHR^1$) oder tertiäre Aminogruppe (z.B. $-NR^1R^2$) oder wenigstens eine Ammoniumgruppe $-N^{\oplus}R^{14}R^{15}R^{16}X^{\ominus}$ aufweist, mit $X^{\ominus}$ = $F^{\ominus}$, $Cl^{\ominus}$, $Br^{\ominus}$, $HSO_4^{\ominus}$, $SO_4^{2\ominus}$, $H_2PO_4^{\ominus}$, $HPO_4^{2\ominus}$ oder $PO_4^{3\ominus}$ und $R^{14}$, $R^{15}$, $R^{16}$ voneinander unabhängige organische Reste (z.B. unabhängig voneinander und unabhängig von $R^1$ dieselben Gruppen wie $R^1$),

$R^{12}$ = unabhängig von $R^{11}$ dieselben Gruppen wie $R^{11}$ oder -H, -OH, $C_1$- bis $C_4$-Alkyl, $-COO^{\ominus}M^{\oplus}$, $-C\equiv CH$,

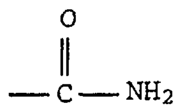, 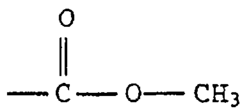, 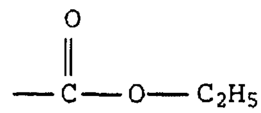 ,

hydroxysubstituiertes $C_1$- bis $C_4$-Alkyl (z.B. hydroxyethyl oder hydroxypropyl) oder

$R^{11}$, $R^{12}$ = gemeinsam den Sauerstoff einer Carboxylgruppe und

$R^{13}$ = -H, $-CH_3$ oder

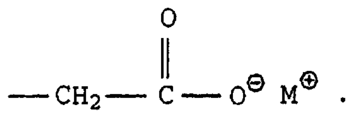

Vorzugsweise ist $R^1 = R^2 = R^5 = R^6 = R^{1'} = R^{2'} = R^{5'} = R^{6'} = -CH_3$.

Wenn das stabile N-Oxyl-Radikal als funktionelle Gruppen eine saure oder basische Gruppe aufweist, läßt sich die Löslichkeit des N-Oxyl-Radikals im wäßrigen Polymerisationsmedium durch Variation des pH-Wertes desselben einstellen.

Als beispielhafte Vertreter erfindungsgemäß geeigneter stabiler N-Oxyl-Radikale seien
4-Hydroxy-2,2,6,6-tetramethyl-1-oxyl-piperidin,
4-Hydroxy-2,6-diphenyl-2,6-dimethyl-1-oxyl-piperidin,
4-Carboxy-2,2,6,6-tetramethyl-1-oxyl-piperidin,
4-Carboxy-2,6-diphenyl-2,6-dimethyl-1-oxyl-piperidin,
3-Carboxy-2,2,5,5-tetramethyl-1-oxyl-pyrrolidin,
3-Carboxy-2,5-diphenyl-2,5-dimethyl-1-oxyl-pyrrolidin und das Natrium- oder Kaliumsalz des Schwefelsäurehalbesters des 4-Hydroxy-2,2,6,6-tetramethyl-1-oxyl-piperidin genannt.

Die Herstellung von 3-Carboxy-2,2,5,5-tetramethyl-1-oxyl-pyrrolidin findet sich z.B. in Romanelli, M.; Ottaviani, M.F.; Martini, G.; Kevan, L., JPCH J: Phys. Chem., EN, 93, 1, 1989, S. 317 - 322.

Die Verbindungen (VI) und (VII) können gemäß US-A 4665185 (z.B. Bsp. 7) sowie DE-A 19510184 erhalten werden.

Weitere geeignete beispielhafte Vertreter sind:

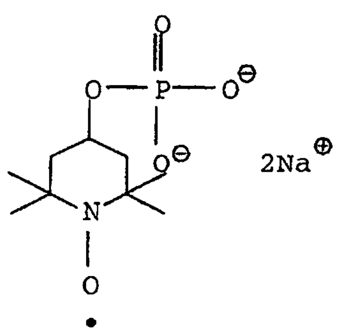

Sunamoto, Junzo; Akiyoshi, Kuzunari, Kihara, Tetsuji; Endo, Masayuki, BCS JA 8, Bull, Chem. Soc. Jpn., EN, 65, 4, 1992, S. 1041 - 1046;

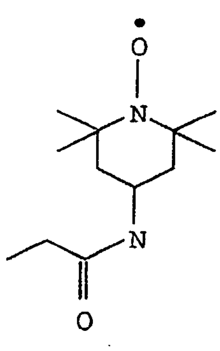

Beilstein Registry Number 6926369 $(C_{11}H_{22}N_3O_2)$;

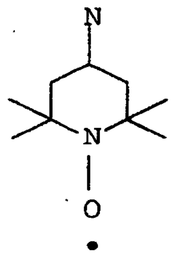

Beilstein Registry Number 6498805 (4-Amino-2,2,6,6-tetramethyl-1-oxyl-piperidin);

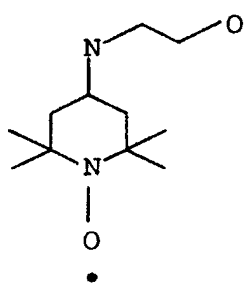

Beilstein Registry Number 6800244 ($C_{11}H_{23}N_2O_2$);

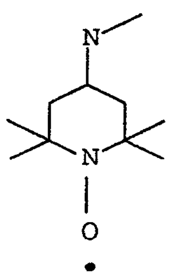

Beilstein Registry Number 5730772 (N-Methyl-4-amino-2,2,6,6-tetramethyl-1-oxyl-piperidin;

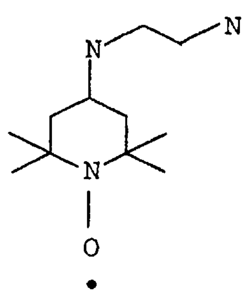

Beilstein Registry Number 5507538 (2,2,6,6-Tetramethyl-4-(2-aminoethylamino)-1-oxyl-piperidin);

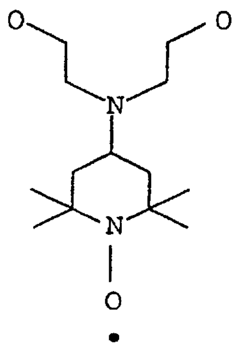

Beilstein Registry Number 4417950 (4<Bis(2-hydroxyethyl)>-amino-2,2,6,6-tetramethyl-1-oxyl-piperidin);

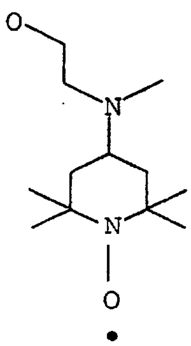

Beilstein Registry Number 4396625 ($C_{12}H_{25}N_2O_2$);

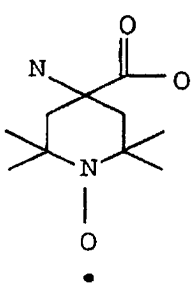

Beilstein Registry Number 4139900 (4-Amino-2,2,6,6-tetramethyl-4-carboxy-1-oxyl-piperidin);

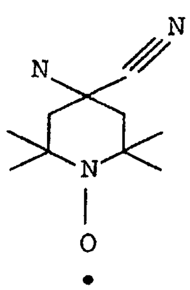

Beilstein Registry Number 4137088 (4-Amino-4-cyano-2,2,6,6-tetramethyl-1-oxyl-piperidin);

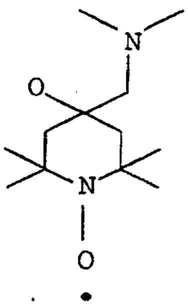

Beilstein Registry Number 3942714 ($C_{12}H_{25}N_2O_2$);

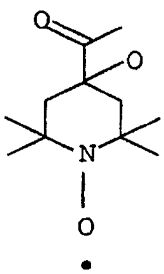

Beilstein Registry Number 1468515 (2,2,6,6-Tetramethyl-4-hydroxy-4-acetyl-1-oxyl-piperidin);

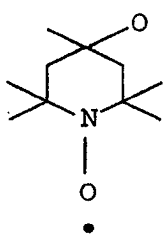

Beilstein Registry Number 1423410 (2,2,4,6,6-Pentamethyl-4-hydroxy-1-oxyl-piperidin);

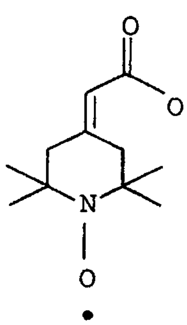

Beilstein Registry Number 6205316 (4-Carboxymethylen-2,2,6,6-tetramethyl-1-oxyl-piperidin);

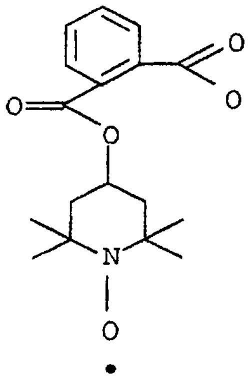

Beilstein Registry Number 1395538
(4-<2-Carboxy-benzoyloxy>-2,2,6,6-tetramethyl-1-oxyl-piperidin);

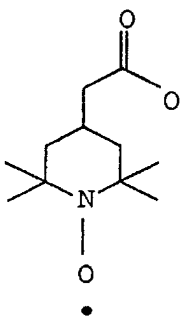

Beilstein Registry Number 3546230
(4-Carboxymethyl-2,2,6,6-tetramethyl-1-oxyl-piperidin);

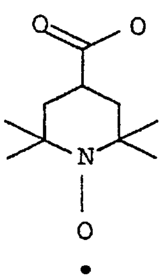

Beilstein Registry Number 3949026
(4-Carboxyl-2,2,6,6-tetramethyl-1-oxyl-piperidin);

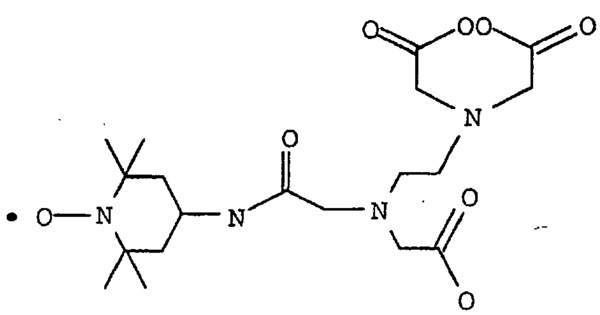

Beilstein Registry Number 4611003
(Ethylendiamintetraessigsäuremono(1-oxyl-2,2,6,6-tetramethyl-piperidinyl-4-amid);

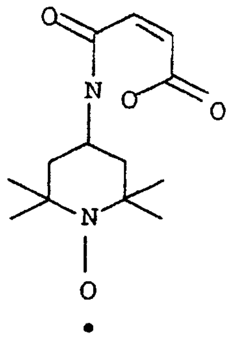

Beilstein Registry Number 5961636
($C_{13}H_{21}N_2O_4$)

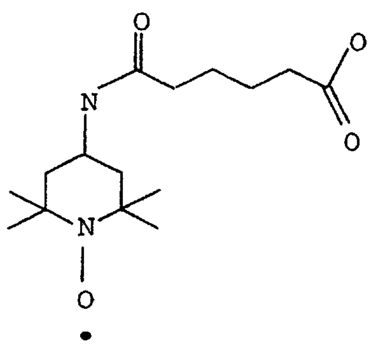

Beilstein Registry Number 5592232
($C_{15}H_{27}N_2O_4$);

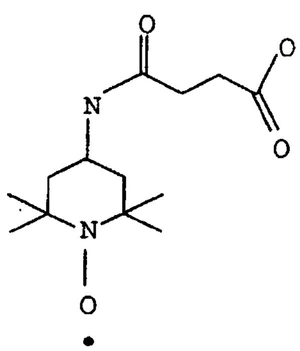

Beilstein Registry Number 5080576
(Bernsteinsäure-N-(2,2,6,6-tetramethyl-1-oxyl-4-piperidinyl)-monoamid);

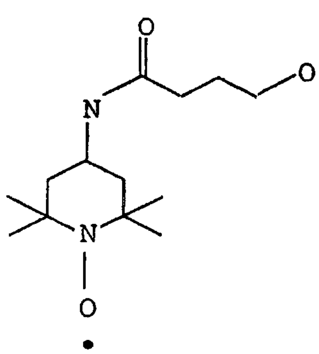

Beilstein Registry Number 5051814
(4-(4-Hydroxybutanoylamino)-2,2,6,6-tetramethyl-1-oxyl-piperidin);

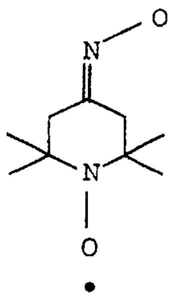

Beilstein Registry Number 4677496 (2,2,6,6-Tetramethyl-4-oximino-1-oxyl-piperidin);

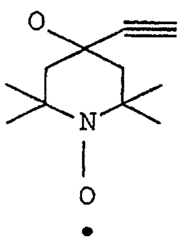

Beilstein Registry Number 1451068 ($C_{11}H_{18}NO_2$);

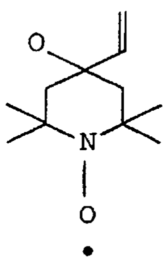

Beilstein Registry Number 1451075 ($C_{11}H_{20}NO_2$);

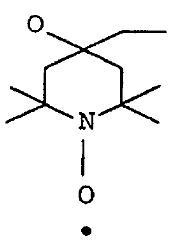

Beilstein Registry Number 1423698 (4-Ethyl-4-hydroxy-2,2,6,6-tetramethyl-1-oxyl-piperidin);

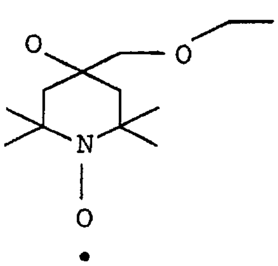

Beilstein Registry Number 5509793 (4-Ethoxymethyl-4-hydroxy-2,2,6,6-tetramethyl-1-oxyl-piperidin);

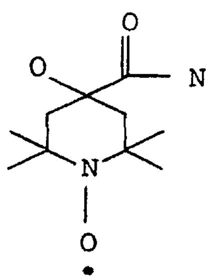

Beilstein Registry Number 3960373 ($C_{10}H_{19}N_2O_3$);

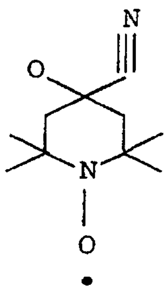

Beilstein Registry Number 4137089 ($C_{10}H_{17}N_2O_2$);

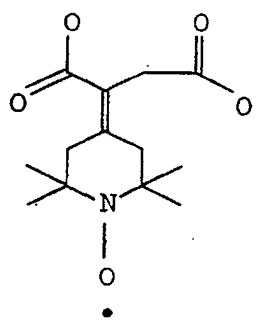

Beilstein Registry Number 3985130 (2,2,6,6-Tetramethyl-1-oxyl-4-piperidyliden)-bernsteinsäure).

Selbstverständlich können erfindungsgemäß auch Gemische von stabilen N-Oxyl-Radikalen angewendet werden.

Als erfindungsgemäß in Kombination mit den stabilen N-Oxyl-Radikalen (erfindungsgemäße Variante a)) einzusetzende radikalische Polymerisationsinitiatoren kommen prinzipiell alle diejenigen in Betracht, die in der Lage sind, eine radikalische Polymerisation auszulösen. Es kann sich dabei sowohl um Peroxide, Hydroperoxide als auch um Azoverbindungen handeln. Sie können sowohl öllöslich als auch wasserlöslich sein.

Beispiele für geeignete radikalische Polymerisationsinitiatoren sind Benzoylperoxid, Peroxodischwefelsäure und ihre Ammoniumund Alkalimetallsalze sowie Wasserstoffperoxid oder Hydroperoxide wie tert.-Butylhydroperoxid. Als Azoverbindungen kommt z.B. 4,4'-Azo-bis-cyanovaleriansäure in Betracht. Selbstverständlich können als solche wasserlöslichen, radikalischen Polymerisationsinitiatoren auch kombinierte Systeme, die aus wenigstens einem Reduktionsmittel und wenigstens einem Peroxid und/oder Hydroperoxid zusammengesetzt sind (nachfolgend Redoxinitiatoren genannt), verwendet werden.

Beispiele für solche Kombinationen sind z.B. tert.-Butylhydroperoxid/Natriummetallsalz der Hydroxymethansulfinsäure sowie Wasserstoffperoxid/Ascorbinsäure. Häufig umfassen die kombinierten Systeme zusätzlich eine geringe Menge einer im wäßrigen Medium löslichen Metallverbindung, deren metallische Komponente in mehreren Wertigkeitsstufen auftreten kann. Beispiele für solche Systeme sind z.B. Ascorbinsäure/Eisen (II) -sulfat/Wasserstoffperoxid oder Natriumsulfit/Eisen(II)sulfat/Wasserstoffperoxid. Selbstverständlich kann in den vorgenannten Systemen anstelle von Ascorbinsäure auch das Natriummetallsalz der Hydroxymethansulfinsäure, Natriumhydrogensulfit oder Natriummetallbisulfit eingesetzt werden. Ferner können in den vorgenannten Systemen anstelle von Wasserstoffperoxid

tert.-Butylhydroperoxid oder Alkalimetallperoxidisulfate und/oder Ammoniumperoxidisulfate angewendet werden. Anstelle eines wasserlöslichen Eisen(II)-salzes wird vielfach eine Kombination aus wasserlöslichen Fe/V-Salzen benutzt.

Bezogen auf die molare Menge an radikalisch zu polymerisierenden Monomeren beträgt die Menge an im erfindungsgemäßen Verfahren eingesetztem radikalischem Polymerisationsinitiator in der Regel $10^{-6}$ bis 2 mol-%, meist $10^{-4}$ bis 1 mol-% und richtet sich in an sich bekannter Weise nach dem gewünschten Molekulargewicht des resultierenden in disperser Verteilung befindlichen Polymerisats.

Das molare Verhältnis zwischen stabilen N-Oxyl-Radikalen und radikalischem Polymerisationsinitiator beträgt im Rahmen der erfindungsgemäßen Verfahrensvariante a) normalerweise 0,5 bis 5, bevorzugt 0,8 bis 4.

Durch Zugabe von organischen Säuren wie Camphersulfonsäure oder p-Toluolsulfonsäure (US-A 5,322,912) oder durch Zugabe von Dimethylsulfoxid (US-A 5,412,047), 2-Fluorpyridin-1-metho-ptoluolsulfonat, 4-(3-Indolyl)-buttersäure bzw. Indolylessigsäure zum Polymerisationsgemisch kann die Polymerisationsgeschwindigkeit des erfindungsgemäßen Verfahrens a) in der Regel erhöht werden.

Als Verbindungen, die unter der Einwirkung von Wärme in ein stabiles N-Oxyl-Radikal und in einen die Polymerisation initiierenden radikalischen Partner zerfallen (im folgenden N-Oxyl-Radikalbildner genannt) und sich damit für die erfindungsgemäße Variante b) eignen, kommen z.B. Verbindungen der allgemeinen Formel X

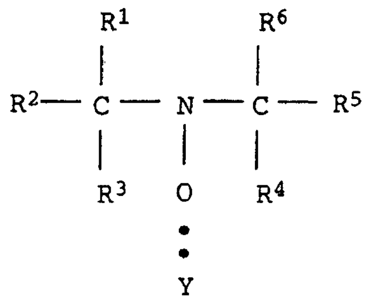 (X),

mit =

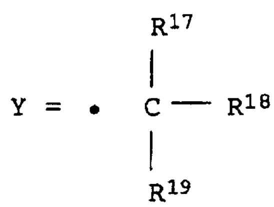 in Betracht,

worin $R^{17}$, $R^{18}$ und $R^{19}$ gleich oder verschieden sind und für Wasserstoff oder eine Alkyl-($C_1$- bis $C_4$-), Phenyl-, Cyano- oder Carbonsäuregruppe oder substituierte Gruppen hiervon stehen.

Verbindungen der allgemeinen Formel X sind z.B. in der EP-B 135 280 veröffentlicht. Verbindungen dieses Typs sind in einfacher Weise z.B. auch dadurch erhältlich, daß man eine geringe Menge an Monomeren mittels radikalischem Polymerisationsinitiator im Beisein von Verbindungen I bis IX radikalisch polymerisiert und anschließend das Polymerisationsprodukt durch Umfällen reinigt. Bezogen auf die molare Menge an radikalisch zu polymerisierenden Monomeren beträgt die erfindungsgemäß zu verwendende Menge an N-Oxyl-Radikalbildnern in der Regel $10^{-6}$ bis 2 mol-%, meist $10^{-4}$ bis 1 mol-%.

Als erfindungsgemäß zu polymerisierende Monomere kommen alle diejenigen wenigstens eine ethylenisch ungesättigte Gruppe aufweisenden Verbindungen in Betracht, die üblicherweise im Rahmen radikalischer wäßriger Emulsionspolymerisationen Anwendung finden. Zu diesen Monomeren zählen Olefine, wie z.B. Ethylen, vinylaromatische Monomere wie Styrol, α-Methylstyrol, o-Chlorstyrol oder Vinyltoluole, Vinyl- und Vinylidenhalogenide wie Vinyl- und Vinylidenchlorid, Ester aus Vinylalkohol und 1 bis 12 C-Atome aufweisenden Monocarbonsäuren wie Vinylacetat, Vinylpropionat, Vinyl-n-butyrat, Vinyllaurat sowie im Handel befindliche Monomere VEOVA® 9-11 (VEOVA X ist ein Handelsname der Firma Shell und steht für Vinylester von Carbonsäuren, die auch als Versatic® X-Säuren bezeichnet werden), Ester aus Allylalkohol und 1 bis 12 C-Atome aufweisenden Monocarbonsäuren wie Allylacetat, Allylpropionat, Allyl-n-butyrat und Allyllaurat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -isobutyl- und -2-ethylhexylester, Maleinsäuredimethylester oder Maleinsäure-n-butylester, Nitrile α,β-monoethylenisch ungesättigter Carbonsäuren wie Acrylnitril sowie $C_{4-8}$-konjugierte Diene wie 1,3-Butadien und Isopren.

Die genannten Monomeren bilden in der Regel die Hauptmonomeren, die, bezogen auf die Gesamtmenge der einzupolymerisierenden Monomeren, normalerweise einen Anteil von mehr als 50 Gew.-% auf sich vereinen. Monomere, die für sich polymerisiert üblicherweise Homopolymerisate ergeben, die eine erhöhte Wasserlöslichkeit aufweisen, werden im Normalfall lediglich als modifizierende Monomere in Mengen, bezogen auf die Gesamtmenge der zu polymerisierenden Monomeren, von weniger als 50 Gew.-%, in der Regel 0,5 bis 20, vorzugsweise 1 bis 10 Gew.-%, miteinpolymerisiert.

Beispiele für derartige Monomere sind 3 bis 6 C-Atome aufweisende α,β-monoethylenisch ungesättigte Mono- und Dicarbonsäuren und deren Amide wie z.B. Acrylsäure, Methacrylsäure, Maleinsäure, Fumarsäure, Itaconsäure, Acrylamid und Methacrylamid, ferner Vinylsulfonsäure und deren wasserlösliche Salze sowie N-Vinylpyrrolidon.

Monomere, die üblicherweise die innere Festigkeit der Verfilmungen der wäßrigen Polymerisatdispersionen erhöhen, werden in der Regel ebenfalls nur in untergeordneten Mengen, meist 0,5 bis 10 Gew.-%, bezogen auf die Gesamtmenge der zu polymerisierenden Monomeren, miteinpolymerisiert. Normalerweise weisen derartige Monomere eine Epoxy-, Hydroxy-, N-Methylol-, Carbonyl- oder wenigstens zwei nicht konjugierte ethylenisch ungesättigte Doppelbindungen auf. Beispiele hierfür sind N-Alkylolamide von 3 bis 10 C-Atome aufweisenden α,β-monoethylenisch ungesättigten Carbonsäuren sowie deren Ester mit 1 bis 4 C-Atome aufweisenden Alkanolen, unter denen das N-Methylolacrylamid und das N-Methylolmethacrylamid ganz besonders bevorzugt sind, zwei Vinylreste aufweisende Monomere, zwei Vinylidenreste aufweisende Monomere sowie zwei Alkenylreste aufweisende Monomere. Besonders geeignet sind dabei die Di-Ester zweiwertiger Alkohole mit α,β-monoethylenisch ungesättigten Monocarbonsäuren, unter denen wiederum die Acryl- und Methacrylsäure vorzugsweise eingesetzt werden. Beispiele für derartige zwei nicht konjugierte ethylenisch ungesättigte Doppelbindungen aufweisende Monomere sind Alkylenglycoldiacrylate- und -dimethacrylate wie Ethylenglycoldiacrylat, 1,3-Butylenglycoldiacrylat, 1, 4-Butylenglycoldiacrylat sowie Propylenglycoldiacrylat, Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat oder Triallylcyanurat. In diesem Zusammenhang von besonderer Bedeutung sind auch die Methacrylsäure- und Acrylsäure-$C_1$-$C_8$-Hydroxyalkylester wie n-Hydroxyethyl-, n-Hydroxypropyl- oder n-Hydroxybutylacrylat und -methacrylat sowie Verbindungen wie Diacetonacrylamid und Acetylacetoxyethylacrylat bzw. -methacrylat.

Vorzugsweise ist das erfindungsgemäße Verfahren auf die Monomeren Styrol, Vinyltoluol, $C_1$- bis $C_8$-Alkyl (Meth)acrylate, insbesondere n-Butylacrylat, 2-Ethylhexylacrylat oder Methylmethacrylat, und Acrylnitril sowie auf Monomerengemische anwendbar, die zu wenigstens 85 Gew. -% aus vorgenannten Monomeren oder Gemischen der vorgenannten Monomeren zusammengesetzt sind.

Als erfindungsgemäß geeignete Dispergiermittel eignen sich insbesondere die im Rahmen radikalisch initiierter wäßriger Emulsionspolymerisationen üblicherweise eingesetzten Emulgatoren. Dies sind z.B. Blockcopolymere von Ethylenoxid und Propylenoxid, ethoxylierte Mono-, Di- und Tri-Alkylphenole (z.B. EO-Grad: 3 bis 50 u. Alkylrest: $C_4$- bis $C_9$), ethoxylierte Fettalkohole (z.B. EO-Grad: 3 bis 50 u. Alkylrest: $C_8$- bis $C_{36}$), sowie Alkali- und Ammoniumsalze von Alkylsulfaten (z.B. Alkylrest: $C_8$- bis $C_{30}$), von Schwefelsäurehalbestern ethoxylierter Alkanole (z.B. EO-Grad: 4 bis 30 u. Alkylrest: $C_{12}$- bis $C_{30}$) und ethoxylierter Alkylphenole (z.B. EO-Grad: 3 bis 50 u. Alkylrest: $C_4$- bis $C_{15}$), von Alkylsulfonsäuren (z.B. Alkylrest: $C_{12}$- bis $C_{35}$) und von Alkylarylsulfonsäuren (z.B. Alkylrest: $C_9$- bis $C_{35}$). Ferner gehören zur Gruppe der erfindungsgemäß geeigneten Emulgatoren die Sulfosuccinate (Sulfobernsteinsäureester) von $C_8$- bis $C_{18}$-Alkanolen sowie die wasserlöslichen Salze dieser Sulfosuccinate, insbesondere die Alkalimetallsalze, unter denen das Natriumsalz bevorzugt ist.

Weitere geeignete Dispergiermittel sind Verbindungen der allgemeinen Formel XI

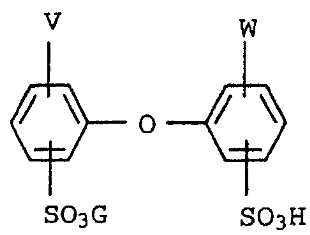

(XI) ,

worin V und W Wasserstoff oder $C_4$- bis $C_{14}$-Alkyl bedeuten und nicht gleichzeitig Wasserstoff sind, und G und H

Alkalimetallionen und/oder Ammoniumionen sein können. Vorzugsweise bedeuten V, W lineare oder verzweigte Alkylreste mit 6 bis 18 C-Atomen oder Wasserstoff und insbesondere mit 6, 12 und 16 C-Atomen, wobei V und W nicht beide gleichzeitig Wasserstoff sind. G und H sind bevorzugt Natrium, Kalium oder Ammoniumionen, wobei Natrium besonders bevorzugt ist. Besonders vorteilhaft sind Verbindungen XI, in denen G und H Natrium, V ein verzweigter Alkylrest mit 12 C-Atomen und W Wasserstoff oder V ist. Häufig werden technische Gemische verwendet, die einen Anteil von 50 bis 90 Gew. -% des monoalkylierten Produktes aufweisen, beispielsweise Dowfax® 2A1 (Warenzeichen der Dow Chemical Company). Die Verbindungen XI sind allgemein bekannt, z.B. aus der US-A 4, 269, 749, und im Handel erhältlich. Die Emulgatormenge wird erfindungsgemäß zweckmäßig so gewählt, daß in der wäßrigen Phase der zu polymerisierenden wäßrigen Emulsion die kritische Micellbildungskonzentration der verwendeten Emulgatoren im wesentlichen nicht überschritten wird. Bezogen auf die in der Emulsion enthaltenen Monomeren beträgt die Emulgatormenge in der Regel 0,1 bis 5 Gew.-%. Selbstverständlich können den Emulgatoren Schutzkolloide an die Seite gegeben werden, die die disperse Verteilung der letztlich resultierenden wäßrigen Polymerisatdispersion zu stabilisieren vermögen.

Zur Herstellung der erfindungsgemäß erforderlichen wäßrigen Emulsion, deren disperse Phase hauptsächlich aus Tröpfchen eines Durchmessers ≤ 500 nm besteht, wird zweckmäßigerweise zunächst in an sich bekannter Weise aus den Bestandteilen der Emulsion eine herkömmliche wäßrige Emulsion, eine Makroemulsion, erzeugt (z.B. die Monomeren, das stabile N-Oxyl-Radikal, den radikalischen Polymerisationsinitiator, Wasser und den Emulgator unter herkömmlichem Rühren miteinander vermischen; oder die Monomeren, einen N-Oxyl-Radikalbildner, Wasser und den Emulgator unter herkömmlichem rühren miteinander vermischen; aufgrund des geringen Verteilungsaufwandes besteht die resultierende wäßrige Emulsion hauptsächlich aus Tröpfchen eines Durchmessers ≥ 1000 nm).

Diese kann anschließend zur erfindungsgemäß erforderlichen wäßrigen Emulsion homogenisiert werden (vgl. P.L. Tang, E.D. Sudol, C.A. Silebi und M.S. El-Aasser in Journal of Applied Polymer Science, Vol. 43, S. 1059 - 1066 [1991]). In der Regel werden dazu Hochdruckhomogenisatoren angewendet. Die Feinverteilung der Komponenten wird in diesen Maschinen durch einen hohen lokalen Energieeintrag erzielt. Zwei Varianten haben sich diesbezüglich besonders bewährt.

Bei der ersten Variante wird die wäßrige Makroemulsion über eine Kolbenpumpe auf über 1000 bar verdichtet und anschließend durch einen engen Spalt entspannt. Die Wirkung beruht hier auf einem Zusammenspiel von hohen Scher- und Druck-gradienten und Kavitation im Spalt. Ein Beispiel für einen Hochdruckhomogenisator, der nach diesem Prinzip funktioniert, ist der Niro-Soavi Hochdruckhomogenisator Typ NS1001L Panda.

Bei der zweiten Variante wird die verdichtete wäßrige Makroemulsion über zwei gegeneinander gerichtete Düsen in eine Mischkammer entspannt. Die Feinverteilungswirkung ist hier vor allem von den hydrodynamischen Verhältnissen in der Mischkammer abhängig. Ein Beispiel für diesen Homogenisatortyp ist der Microfluidizer Typ M 120 E der Microfluidics Corp.. In diesem Hochdruckhomogenisator wird die wäßrige Makroemulsion mittels einer pneumatisch betriebenen Kolbenpumpe auf Drücke von bis zu 1200 atm komprimiert und über eine sogenannte "interaction chamber" entspannt. In der "interaction chamber" wird der Emulsionsstrahl in einem Mikrokanalsystem in zwei Strahlen aufgeteilt, die unter 180° aufeinandergeführt werden. Ein weiteres Beispiel für einen nach dieser Homogenisierungsart arbeitenden Homogenisator ist der Nanojet Typ Expo der Nanojet Engineering GmbH. Allerdings sind bei Nanojet anstatt eines festen Kanalsystems zwei Homogenisierventile eingebaut, die mechanisch verstellt werden können.

Neben den ebenda genannten Prinzipien kann die Homogenisierung aber z.B. auch durch Anwendung von Ultraschall (z.B. Branson Sonifier II 450) erzeugt werden. Die Feinverteilung beruht hier auf Kavitationsmechanismen. Der Zerteilungsgrad der im Schallfeld erzeugten wäßrigen Emulsion hängt dabei nicht nur von der eingebrachten Schalleistung, sondern auch noch von anderen Faktoren, wie z.B. der Intensitätsverteilung des Ultraschalls in der Mischkammer, der Verweilzeit, der Temperatur und den physikalischen Eigenschaften der zu emulgierenden Stoffe, beispielsweise von der Zähigkeit, der Grenzflächenspannung und dem Dampfdruck ab. Die resultierende Tröpfchengröße hängt dabei u.a. von der Konzentration des Emulgators sowie von der bei der Homogenisierung eingetragenen Energie ab und ist z.B. durch entsprechende Veränderung des Homogenisierungsdrucks bzw. der entsprechenden Ultraschallenergie gezielt einstellbar.

Die mittlere Größe der Tröpfchen der dispersen Phase der erfindungsgemäß zu verwendenden wäßrigen Emulsion läßt sich nach dem Prinzip der quasielastischen dynamischen Lichtstreuung bestimmen (der sogenannte z-mittlere Tröpfchendurchmesser $\bar{d}_z$ der unimodalen Analyse der Autokorrelationsfunktion; siehe Beispiele).

Erfindungsgemäß betragen die solchermaßen an erfindungsgemäß zu verwendenden wäßrigen Emulsionen ermittelten Werte für $\bar{d}_z$ ≤ 500 nm, häufig ≤ 400 nm. Günstig ist erfindungsgemäß der $\bar{d}_z$-Bereich von 100 nm bis 300 nm bzw. von 100 nm bis 200 nm. Im Normalfall beträgt $\bar{d}_z$ der erfindungsgemäß einzusetzenden wäßrigen Emulsion ≥ 40 nm.

Günstig für die Stabilität der Tröpfchengrößenverteilung der erfindungsgemäß einzusetzenden wäßrigen Emulsion ist es, wenn die organische Phase wenigstens eine Verbindung enthält, deren Löslichkeit in Wasser, bezogen auf die gesättigte wäßrige Lösung, bei 25°C und 1 atm im wesentlichen weniger als 0,001 Gew.-% beträgt (gewährleistet reduzierte Ostwaldreifung). Diese wenigstens eine Verbindung kann sowohl ein Monomeres als auch ein N-Oxyl-Radikal oder ein N-Oxyl-Radikalbildner sein. Verfügt keiner der genannten Bestandteile des zu polymerisierenden Gemisches über vorstehend geforderte geringe Wasserlöslichkeit, empfiehlt es sich, eine nicht radikalisch polymerisierbare organische Verbindung mit entsprechend geringer Wasserlöslichkeit in die organischen Tröpfchen der erfindungsgemäß zu verwendenden wäßrigen Emulsion einzuarbeiten.

Beispiele für Monomere, die eine wie vorstehend geforderte geringe Wasserlöslichkeit aufweisen, sind p-tert. -Butylstyrol, Ester aus 3 bis 6 C-Atome aufweisenden $\alpha,\beta$-monoethylenisch ungesättigten Carbonsäuren und $\geq 12$ C-Atome (in der Regel bis zu 30 C-Atome) aufweisenden Alkanolen wie z.B. Laurylacrylat und Stearylacrylat. Aber auch Ester aus Vinylalkohol oder Allylalkohol und $\geq 9$ C-Atome (in der Regel bis zu 30 C-Atome) aufweisenden Alkancarbonsäuren, wie z.B. Vinylnonanoat (VEOVA 9), Vinyldecanoat (VEOVA 10), Vinyllaurat und Vinylstearat, sind solche Monomere. Aber auch Makromonomere wie Oligopropenacrylat sind solche Monomere (ganz allgemein sind Makromonomere polymere oder oligomere Verbindungen, die wenigstens eine, meist entständige, ethylenisch ungesättigte Doppelbindung aufweisen; ihr relatives zahlenmittleres Molekulargewicht sollte für eine Verwendbarkeit als geringst wasserlösliches Monomeres vorzugsweise nicht mehr als 100000 betragen; in der Regel wird dieses relative zahlenmittlere Molekulargewicht 1000 bis 50000 bzw. 2000 bis 50000 betragen; Makromonomere sind dem Fachmann bekannt; ihre Herstellung ist beispielsweise in Makromol. Chem. 223 (1994) S. 29 bis 46 beschrieben;). Ganz allgemein kommen als geringst wasserlösliche Monomere alle diejenigen in Betracht, deren molale Löslichkeit bei 25°C und 1 atm in Wasser geringer als die entsprechende Löslichkeit von Laurylacrylat ist. Solche Monomeren sind z.B. auch das Methacryloyl-Polybutylacrylat AB-6 und das Methacryloyl-Polystyrol A5-6 der Fa. Toa Gosei Kagaku KK (JP), die beide ein zahlenmittleres relatives Molekulargewicht von 6000 aufweisen. Aber auch Polyol 130 der Hüls AG (ein stereospezifisches, niedrigviskoses Polybutadien (75 % 1,4-cis, 24 % 1,4-trans, 1 % vinyl), dessen dynamische Viskosität bei 20°C 3000 mPa·s beträgt) und Polyol 110 der Hüls AG (ein stereospezifisches, niedrigviskoses Polybutadien (75 % 1,4-cis, 24 % 1,4-trans, 1 % vinyl), dessen dynamische Viskosität bei 20°C 3000 mPa·s beträgt) bilden als Makromonomere mit geringer Wasserlöslichkeit einsetzbare Verbindungen.

Beispiele für erfindungsgemäß verwendbare nicht polymerisierbare Verbindungen mit geringer Wasserlöslichkeit sind Acronal® A 150 F, ein Poly-n-butylacrylat der BASF AG, dessen 50 gew.-%ige Lösung in Ethylacetat bei 23°C und 1 atm eine Viskosität (bestimmt nach ISO 3219, DIN 53019, bei 250 $s^{-1}$) von 33 mPa·s aufweist.

Aber auch PnBa, ein Hochtemperatur (120°C) lösungs (Isopropanol)polymerisat des n-Butylacrylats mit einem bei 25°C in Isopropanol bestimmten K-Wert von 24, kommt als solche Ostwaldreifung mindernde Verbindung in Betracht. Der K-Wert ist eine relative Viskositätszahl, die in Analogie zur DIN 53726 bestimmt wird. Er beinhaltet die Fließgeschwindigkeit des reinen Lösungsmittels relativ zur Fließgeschwindigkeit der 0,1 gew.-%igen Lösung des Polymerisats im selben Lösungsmittel (vgl. auch Cellulosechemie, Vol. 13 (1932), S. 58 - 64, und Kirk-Othmer Encyclopedia of Chemical Technology, Vol. 23, S. 967 - 968). Der K-Wert ist ein Maß für das mittlere Molekulargewicht eines Polymerisats. Ein hoher K-Wert entspricht dabei einem hohen mittleren Molekulargewicht.

Mögliche Ostwaldreifung reduzierende Verbindungen sind aber auch Harze wie Kollophoniumharze (vgl. Ullmanns Encycl. Techn. Chem., 4. Auflage (1976), Vol. 12, S. 525 - 538) und Kohlenwasserstoffharze (vgl. Encycl. Polym. Sci. Eng. (1987) Vol. 7, S. 758 - 782), wie z.B. Kristalex F 85 der Fa. Hercules. Beispielhaft genannt sei Foral® 85 E, ein Glycerinester von hochhydriertem Kollophoniumharz (Erweichungspunkt: 86°C) der Fa. Hercules. Weiter konnen als solche Verbindungen Polystyrole in Betracht (vgl. C.M. Miller et al., J. Polym. Sci.: Part A: Polym. Chem. 32, 2365 - 2376, 1994).

Aber auch sonstige wasserunlösliche, öllösliche Substanzen wie aliphatische und aromatische Kohlenwasserstoffe (z.B. Hexadekan), Filmbildhilfsmittel oder Weichmacher wie Plastilit® 3060 (ein Polypropylenglykol-alkylphenylether Weichmacher) kommen als mögliche Ostwaldreifung mindernde Verbindungen (die häufig in Form von Gemischen angewendet werden) in Betracht.

Bevorzugt enthalten die erfindungsgemäß zu verwendenden wäßrigen Emulsionen, bezogen auf die enthaltenen Monomeren, wenigstens 0,5 Gew.-% an einer wie vorstehend beschriebenen geringstwasserlöslichen Verbindung.

Eine obere Schranke für die in dieser Weise bezogene Menge an enthaltenen, eine geringstfügige Wasserlöslichkeit aufweisenden, Verbindungen besteht nicht. Diese Aussage gilt insbesondere dann, wenn es sich bei selbigen ausschließlich um Monomere handelt. Handelt es sich bei der verwendeten eine geringstfügige Wasserlöslichkeit aufweisenden Verbindung um kein Monomeres und um keinen N-Oxyl-Radikalbildner, wird deren wie vorstehend bezogener Gehalt jedoch im Normalfall 200 Gew.-% nicht übersteigen und häufig $\leq 100$ Gew.-% betragen. Erfindungsgemäße Ausführungsformen sind auch solche, in denen der wie vorstehend bezogene Gehalt an diesen Verbindungen 1 bis 50 Gew.-% oder 2 bis 30 Gew.-% oder 5 bis 15 Gew.-% beträgt.

Die wie vorstehend beschriebenen wäßrigen Emulsionen sind in einfachster Weise dadurch zur Polymerisation zu bringen, daß man sie in einem Polymerisationsgefäß auf die Polymerisationstemperatur erwärmt. Letztere beträgt erfindungsgemäß mit Vorteil > 100°C bis 180°C. Besonders vorteilhaft sind Temperaturen von 120 bis 150°C.

Vorzugsweise wird die Polymerisation bei einem Druck durchgeführt, der oberhalb des Dampfdrucks des Polymerisationsgemisches bei der entsprechenden Polymerisationstemperatur liegt. Er kann > 1 bar bis 1000 bar

betragen. Mit Vorteil beträgt der Polymerisationsdruck 2 bis 20 bar. Ganz besonders vorteilhaft ist ein Polymerisationsdruck von 4 bis 10 bzw. 5 bis 7 bar.

In einfacher Weise lassen sich die gewünschten Druckverhältnisse dadurch einstellen, daß man im Polymerisationsreaktor vor dem Aufheizen des Polymerisationsgemisches auf die gewünschte Polymerisationstemperatur mittels inerten Gasen wie z.B. Methan, $CO_2$, CO, Ar, He oder $N_2$ einen Vordruck einstellt. In typischer Weise kann ein solcher Vordruck z.B. 3 bis 5 bar betragen. Anschließend wird der geschlossene Polymerisationsreaktor (Druckreaktor) auf die Polymerisationstemperatur gebracht. Üblicherweise erfolgt die Durchführung der erfindungsgemäßen radikalisch initiierten wäßrigen Emulsionspolymerisation unter Ausschluß von molekularem Sauerstoff.

Selbstverständlich kann aber auch im Beisein von molekularem Sauerstoff polymerisiert werden. D.h., der gewünschte Vordruck kann z.B. auch mittels Luft eingestellt werden. Aber auch gasförmige Monomere wie Butadien oder Ethylen, gegebenenfalls im Gemisch mit vorgenannten Gasen, können zur Vordruckeinstellung herangezogen werden. Üblicherweise erfolgt die Vordruckeinstellung bei Temperaturen < 100°C. In der Regel wird sie bei Temperaturen von 0°C bis 75°C bzw. 25°C bis 75°C vorgenommen.

Häufig wird bei der erfindungsgemäßen Verfahrensvariante a) die Temperatur der zu polymerisierenden erfindungsgemäßen wäßrigen Emulsion zunächst auf einen Wert von 50°C bis < 100°C eingestellt, um den Zerfall des radikalischen Polymerisationsinitiators auszulösen. Auf die eigentliche Polymerisationstemperatur wird anschließend erwärmt.

Erfindungsgemäß wesentlich ist, daß als Produkt eine pseudolebende wäßrige Polymerisatdispersion erhalten wird. Das heißt, fügt man zu der erhaltenen wäßrigen Polymerisatdispersion neue Monomere (einfach einrühren) und erhöht dann die Temperatur, wird die Polymerisation fortgeführt, ohne daß es des Zusatzes von radikalischem Polymerisationsinitiator bedarf. Die dispergierten Partikel der zuvor erhaltenen wäßrigen Polymerisatdispersion fungieren dabei als Polymerisationsstätten.

Auf diese Weise lassen sich so in vergleichsweise kontrollierter Form sowohl statistische, alternierende als auch segmentierte Copolymerisate, insbesondere Zwei- und Dreiblockcopolymerisate, erzeugen. Erforderlich ist lediglich ein in entsprechend häufiger Weise erfolgender Wechsel der zugeführten Monomerenart.

Durch entsprechende Steuerung der Zufuhr an zu polymerisierenden Monomeren können auch Gradientenpolymerisate, d.h., Polymerisate mit zu- oder abnehmendem Comonomergehalt entlang der Polymerisatkette hergestellt werden. Bei Dreiblockcopolymerisaten A-Block-B-Block-C-Block können die Blöcke A und C aus gleichen oder verschiedenen Monomeren aufgebaut sein. Die Glasübergangstemperatur der Blöcke kann nach Belieben gewählt werden. Beispielsweise kann die chemische Zusammensetzung der Blöcke A, C so gewählt werden, daß ihre Glasübergangstemperatur ≥ 0°C beträgt. Gleichzeitig kann die chemische Zusammensetzung des Blocks B so gewählt werden, daß dessen Glasübergangstemperatur < 0°C beträgt.

Dabei kann der Block B z.B. zu mehr als 70 Gew.-% aus $C_1$- bis $C_8$- (Meth)acrylaten in polymerisierter Form aufgebaut sein. Häufig ist der Block B dabei aus n-Butylacrylat, 2-Ethylhexylacrylat oder deren Gemischen in polymerisierter Form aufgebaut.

Selbstverständlich können als Comonomere auch solche einpolymerisiert werden, die mehr als eine Vinylgruppe aufweisen. Als Ergebnis werden vernetzte Polymerisate erhalten. Erfindungsgemäß besonders vorteilhaft ist die Herstellung von wäßrigen Polymerisatdispersionen, deren dispergierte Polymerisatpartikel eine Kern/Schale-Morphologie aufweisen. Die Vorteilhaftigkeit resultiert insbesondere aus einer verbesserten Anknüpfung der Schale an den Kern. Erhältlich ist eine Kern/Schale-Morphologie in der Regel dann, wenn mit der Polymerisationsdauer ein Monomerenwechsel vollzogen und gleichzeitig eine Neubildung von dispergierten Polymerisatpartikeln im wesentlichen unterdrückt wird. Vorzugsweise werden in den Kern vernetzend wirkende Monomere copolymerisiert. Beispielsweise kann der Kern aus Polystyrol oder Polymethylmethacrylat oder aus einem Copolymerisat von Styrol und Acrylnitril aufgebaut sein und eine Glasübergangstemperatur ≥ 25°C aufweisen. Die erste Schale kann beispielsweise aus Polybutadien, Poly-n-alkylacrylat wie Poly-n-butylacrylat oder aus Copolymerisaten mit einer Glasübergangstemperatur Tg < 0°C bestehen. Daran kann sich eine oder mehrere weitere harte Schalen (z.B. aus Polystyrol, Polymethylmethacrylat oder Poly-styrol-acrylnitril-copolymerisat) mit einer Tg ≥ 25°C anschließen.

Solche Kern-Schale Polymerisatpartikel können nach ihrer Isolierung als Additive zur Modifizierung anderer Kunststoffe eingesetzt werden.

Das Molekulargewicht der erfindungsgemäß erhältlichen, in wäßrigem Medium dispergiert befindlichen, Polymerisate ist in einfacher Weise dadurch einstellbar, daß man zum gewünschten Zeitpunkt die Polymerisationstemperatur absenkt und so die Blockade der wachsenden Polymerisatkettenenden durch die stabilen N-Oxyl-Radikale einfriert. In der Regel tritt dies bei unterhalb 100°C liegenden Temperaturen ein. Durch Temperaturerhöhung kann eine solche Blockade rückgängig gemacht werden. Eine andere Möglichkeit zur Einstellung des Molekulargewichts besteht in der Begrenzung der Menge der zu polymerisierenden Monomeren. Eine irreversible Molekulargewichtseinstellung gestattet der Zusatz von klassischen Molekulargewichtsreglern wie Estern aus Thioglykolsäure und 2-Ethylhexanol oder tert. -Dodecylmercaptan. Ihr Zusatz terminiert die wachsenden Polymerisatkettenenden irreversibel und befreit die Polymerisatketten von den stabilen N-Oxyl-Radikalen, die nachfolgend z.B. durch in geeigneter Weise durchzuführende Extraktion eliminiert werden können.

Erfindungsgemäß sind so in einfacher Weise wäßrige Dispersionen von Polymerisaten erhältlich, deren gewichtsmittleres Molekulargewicht $\overline{M}_w$ gezielt Werte von ≥ 1000 bis 250000, bzw. ≥ 10000 bis 250000 beträgt. Die Polydispersitätsindices des Molekulargewichts können < 2, häufig < 1,5 betragen. Im Fall von Blockcopolymerisaten gilt dies auch für die einzelnen Segmente.

Nach beendeter Polymerisation kann die Teilchengröße der dispergierten Polymerisatpartikel z.B. durch chemische Agglomeration oder durch Druckagglomeration vergröbert werden. Anschließend kann die wäßrige Polymerisatdispersion durch Verdampfen von Dispergiermedium aufkonzentriert werden. Es sind so erfindungsgemäß wäßrige Polymerisatdispersionen herstellbar, deren Feststoffgehalt, bezogen auf die wäßrige Polymerisatdispersion, 10 bis 50 Vol.-% und bei Bedarf bis zu 75 Vol.-% beträgt.

Erfindungsgemäß sind wäßrige Polymerisatdispersionen erhältlich, deren dispergierte Polymerisatpartikel aus Polymerisat der nachfolgenden Struktur bestehen:

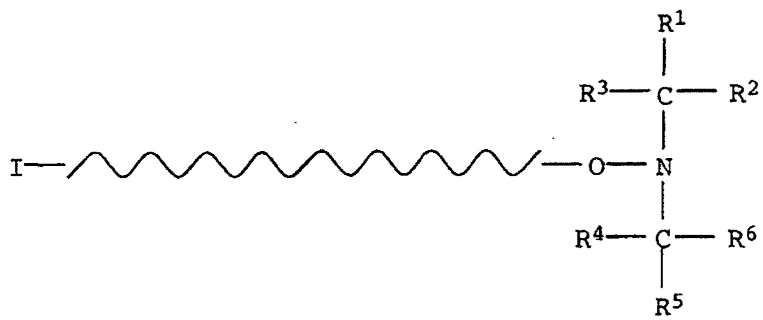

mit
I = Rest des radikalischen Polymerisationsinitiators und

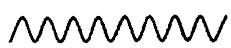

= verzweigtes oder lineares Copolymerisat.

Verwendet man einen radikalischen Polymerisationsinitiator, der beim thermischen Zerfall Bruchstücke mit mehr als einer radikalischen Funktionalität entwickelt, sind auch nachfolgende Strukturen möglich:

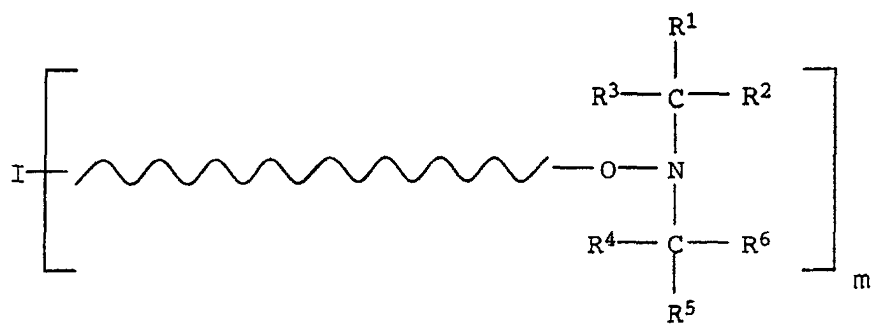

mit m = 1 bis 4.

Ähnliche Strukturen sind möglich, wenn mehrwertige stabile N-Oxyl-Radikale verwendet werden, d.h. Verbindungen, die mehr als eine N-Oxyl-Radikalgruppe aufweisen.

Handelt es sich bei

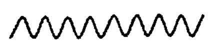

um ein Blockcopolymerisat aus einem hydrophoben und einem hydrophilen Block, sind vorgenannte Strukturen als Dispergiermittel geeignet (vgl. die ältere Anmeldung DE-A 19648029).

Ein Nachteil der erfindungsgemäßen radikalisch initiierten wäßrigen Emulsionspolymerisation ist ihre teilweise vergleichsweise geringe Reaktionsgeschwindigkeit. Vor diesem Hintergrund kann es zweckmäßig sein, die erfindungsgemäße Verfahrensweise mit einer klassischen radikalisch initiierten wäßrigen Emulsionspolymerisation zu kombinieren. Dies kann beispielsweise dadurch erfolgen, daß man erfindungsgemäß beginnt und anschließend klassisch fortfährt.

Im diesem Fall wird beispielsweise zum als angemessen erachteten Zeitpunkt radikalischer Polymerisationsinitiator im Überschuß (relativ zur enthaltenen Menge an N-Oxyl-Radikal) zugesetzt. In der Regel wird man dabei den Initiatorzusatz mit einem Monomerenund gegebenenfalls Emulgatorzusatz begleiten.

Die Polydispersität des resultierenden Polymerisats ist dann erhöht. Selbstverständlich kann das erfindungsgemäße Verfahren auch in der Zulauffahrweise gemäß der DE-A 19 628 143 realisiert werden.

Beispiele

Allgemeines

Die Bestimmung der mittleren Größe der Tröpfchen der dispersen Phase der erfindungsgemäß zu verwendenden wäßrigen Emulsionen sowie die Bestimmung der mittleren Größe der in der resultierenden wäßrigen Polymerisatdispersion in disperser Verteilung befindlichen Polymerisatteilchen erfolgte in Anwendung des Prinzips der quasielastischen dynamischen Lichtstreuung (bestimmt wurde der sogenannte z-mittlere Durchmesser $\bar{d}_z$ der unimodalen Analyse der Autokorrelationsfunktion). Dazu wurde ein Coulter N4 Plus Particle Analyser der Fa. Coulter Scientific Instruments verwendet (1 bar, 25°C). Die Messungen wurden an verdünnten wäßrigen Emulsionen bzw. Dispersionen vorgenommen, deren Gehalt an nichtwäßrigen Bestandteilen 0,01 Gew.-% betrug. Die Verdünnung wurde dabei im Fall der wäßrigen Polymerisatdispersionen mittels Wasser und im Fall der wäßrigen Emulsionen mittels Wasser, das an der nicht wäßrigen Phase gesättigt war, vorgenommen. Letztere Maßnahme sollte verhindern, daß mit der Verdünnung eine Änderung der Tröpfchendurchmesser einhergeht.

Die Bestimmung der Feststoffgehalte der resultierenden wäßrigen Polymerisatdispersionen erfolgte gravimetrisch in Anlehnung an DIN 53 216 (Trocknungsdauer: 30 min, Trocknungstemperatur: 140°C).

Die Molekulargewichte wurden mittels GPC (Gelpermeationschromatographie) ermittelt. Die Eichung erfolgte mittels Polystyrol-Standards, als mobile Phase wurde Tetrahydrofuran gewählt und die Detektion erfolgte anhand des Brechungsindex.

Zum Nachweis einer Blockstruktur wurden dem Film der wäßrigen Polymerisatdispersion mit einem Ultracut E (Fa. Reichert Jung) bei Raumtemperatur ultradünne Schnitte entnommen. Die Schnitte wurden auf Cu-Netzchen übertragen und in $OsO_4$-Dampf kontrastiert (Butadien reagiert mit $OsO_4$). Anschließend wurden im Transmissionselektronenmikroskop (TEM) am kontrastierten Schnitt Aufnahmen durchgeführt (die schweren Osmiumkerne fangen die Elektronen ein, die übrigen Atomkerne lassen die Elektronen durch).

Die Ermittlung der Glasübergangstemperatur Tg erfolgte nach der Differential-Scanning-Calorimetrie-Methode (DSC, midpoint temperature) an den Filmen der wäßrigen Polymerisatdispersion.

Die Füllung der Polymerisationsgefäße erfolgte vor Beginn der Polymerisation bei 25°C.

Herstellung von N-Oxyl-Radikalbildnern

A) In 750 g Styrol wurden bei 25°C 4,5 g Benzoylperoxidhydrat (25 Gew.-% Wasser), 0,938 g 2,2,6,6-Tetramethyl-1-oxylpiperidin (TEMPO) und 1,5 g Camphersulfonsäure (CSA) eingerührt. Anschließend wurde das Gemisch auf 135°C erhitzt und 4,5 h bei dieser Temperatur gehalten. Danach wurde das Reaktionsgemisch abgekühlt und bei 30°C und reduziertem Druck getrocknet. Anschließend wurde in Toluol aufgenommen und zwei Mal in Methanol umgefällt (bezogen auf Toluol wurde die zehnfache Masse Methanol angewendet). Dabei wurden 545 g einer makromolekularen N-Oxyl-Radikalbildners A erhalten. Tabelle 1 weist dessen $\bar{M}_w$, $\bar{M}_n$ und PDI aus.

B) In 208,3 g Styrol wurden bei 25°C 1,29 g Benzoylperoxidhydrat (25 Gew.-% Wasser), 0,938 g TEMPO und 0,32 g CSA eingerührt. Anschließend wurde das Gemisch auf 125°C erhitzt und 6 h bei dieser Temperatur gehalten. Danach wurde das Reaktionsgemisch abgekühlt und bei 25°C in Toluol gelöst. Dann wurde zwei Mal in Methanol umgefällt (bezogen auf Toluol wurde die zehnfache Masse Methanol angewendet). Dabei wurden 63 g eines makromolekularen N-Oxyl-Radikalbildners B erhalten. Tabelle 1 weist dessen $\bar{M}_w$, $\bar{M}_n$ und PDI aus.

Tabelle 1

| N-Oxyl-Radikalbildner | $\bar{M}_n$ | $\bar{M}_w$ | PDI |
|---|---|---|---|
| A | 18744 | 30553 | 1,63 |
| B | 18507 | 23690 | 1,28 |

Vergleichsbeispiel

19,5 g des N-Oxyl-Radikalbildners B wurden mit 84,75 g Styrol, 2,54 g einer 80 gew.-%igen wäßrigen Lösung des Natriumsalzes des Dihexylesters der Sulfobernsteinsäure (Aerosol® MA80 der Fa. Dow Chemical Inc., Emulgatorlösung 1) und 716,1 g Wasser unter Rühren vermischt. Anschließend wurde die erhaltene wäßrige Emulsion in einen gerührten 3 1-Druckkessel gegeben. Mittels molekularem Stickstoff wurde in selbigem ein Vordruck von 5 bar und die wäßrige Emulsion ($\bar{d}_z$ >> 500 nm) auf 130°C erhitzt und während 3 h bei dieser Temperatur gehalten. Dann wurden in den Druckessel 57,59 g Acrylnitril, 29,35 g Styrol und 2,17 g Emulgatorlösung gegeben und das Gemisch weitere 4 h bei 130°C unter entsprechendem Überdruck gerührt. Danach wurde das Reaktionsgemisch auf 25°C abgekühlt und analysiert. Es konnte im wesentlichen keine Polymerisatbildung festgestellt werden.

Beispiel 1

19,5 g des N-Oxyl-Radikalbildners B wurden mit 84,75 g Styrol, 2,54 g Emulgatorlösung 1 und 716,8 g Wasser unter Rühren vermischt. Anschließend wurde das erhaltene Gemisch durch Anwendung von Ultraschall (Branson Sonifier II 450) während 20 min zu einer wäßrigen Emulsion mit $\bar{d}_z$ = 169 nm homogenisiert. Anschließend wurde die erhaltene wäßrige Emulsion in einen gerührten 3 1-Druckkessel gegeben. Mittels molekularem Stickstoff wurde in selbigem ein Vordruck von 5 bar eingestellt und dann die wäßrige Emulsion auf 130°C erhitzt und während 3 h bei dieser Temperatur gehalten. Danach wurde eine Probe entnommen und analysiert. Es lag eine stabile wäßrige Polymerisatdispersion vor, die in Tabelle 2 charakterisiert ist. Schließlich wurden in den Druckkessel wie im Vergleichsbeispiel 57,59 g Acrylnitril, 29,35 g Styrol und 2,17 g Emulgatorlösung 1 gegeben und das Gemisch weitere 4 h bei 130°C unter entsprechendem Überdruck gerührt. Dann wurde das Reaktionsgemisch auf 25°C abgekühlt. Es wurde eine stabile wäßrige Polymerisatdispersion erhalten, die in Tabelle 2 charakterisiert ist.

Tabelle 2

| Polymerisationsdauer (h) | Feststoffgehalt (Gew.-%) | $\bar{d}_z$ (nm) | Glasübergangstemp. [°C] | $\bar{M}_w$ | PDI |
|---|---|---|---|---|---|
| 3 | 5,4 | 192 | 93,8 | 62800 | 1,55 |
| 7 | 12 | 214 | 87,4 | 187500 | 1,97 |

Beispiel 2

0,12 g TEMPO, 0,09 g Benzoylperoxidhydrat (25 Gew.-% Wasser), 96,51 g Styrol, 4,83 g Hexadekan, 2,54 g Emulgatorlösung 1 und 716 g Wasser wurden unter Rühren vermischt. Anschließend wurde das erhaltene Gemisch durch Anwendung von Ultraschall (Branson Sonifier II 450) zu einer wäßrigen Emulsion mit $\bar{d}_z$ = 188 nm homogenisiert. Anschließend wurde die erhaltene wäßrige Emulsion in einen gerührten 3 1-Druckkessel gegeben. Mittels molekularem Stickstoff wurde in selbigem ein Vordruck von 5 bar eingestellt und dann die wäßrige Emulsion auf 130°C erhitzt und während 3 h bei dieser Temperatur gehalten. Dann wurden in den Druckkessel 57,59 g Acrylnitril, 29,35 g Styrol und 2,17 g Emulgatorlösung 1 gegeben und das Gemisch weitere 4 h bei 130°C unter entsprechendem Überdruck gerührt. Dann wurde das Reaktionsgemisch auf 25°C abgekühlt. Es wurde eine stabile wäßrige Polymerisatdispersion erhalten, die in Tabelle 3 charakterisiert ist. Zusätzlich weist Tabelle 3 das Ergebins der Analyse an verschiedenen als Funktion der Polymerisationsdauer entnommenen Proben aus.

Tabelle 3

| Polymerisationsdauer (h) | Feststoffgehalt (Gew.-%) | $\bar{d}_z$ (nm) | $M_w$ | PDI |
|---|---|---|---|---|
| 1 | 0,7 | 272 | - | - |
| 2 | 2,6 | 287 | - | - |

Tabelle 3 (fortgesetzt)

| Polymerisationsdauer (h) | Feststoffgehalt (Gew.-%) | $\bar{d}_z$ (nm) | $M_w$ | PDI |
|---|---|---|---|---|
| 3 | 3,5 | 297 | - | - |
| 4 | 7,3 | 387 | 40830 | 1,35 |
| 5 | 8,7 | 414 | 87270 | 1,53 |
| 6 | 11,4 | 457 | 112300 | 1,64 |
| 7 | 11,5 | 484 | 138800 | 1,75 |

Beispiel 3

33 g des N-Oxyl-Radikalbildners A wurden mit 165 g Styrol, 7,07 g einer 35 Gew.-%igen wäßrigen Lösung des Natriumsalzes das Schwefelsäurehalbesters von ethoxyliertem Nonylphenol [EO-Grad: 25] (Emulphor® NPS der BASF Aktiengesellschaft, Emulgatorlösung 2), 1,65 g einer 50 Gew.-%igen wäßrigen Lösung des Natriumsalzes des Dioctylesters der Sulfobernsteinsäure (Lumiten® I-RA der BASF Aktiengesellschaft, Emulgatorlösung 3) und 800 g Wasser unter Rühren vermischt. Anschließend wurde das erhaltene Gemisch durch Anwendung von Ultraschall (Branson Sonifier II 450) zu einer wäßrigen Emulsion mit $\bar{d}_z$ = 185 nm homogenisiert. Anschließend wurde die erhaltene wäßrige Emulsion in einen gerührten 3-1-Druckkessel gegeben. Mittels molekularem Stickstoff wurde in selbigem ein Vordruck von 1 bar eingestellt und dann die wäßrige Emulsion auf 130°C erhitzt und während 24 h bei dieser Temperatur gehalten. Danach wurde das Reaktionsgemisch auf 25°C abgekühlt. Es wurde eine stabile wäßrige Polymerisatdispersion erhalten, die in Tabelle 4 charakterisiert ist. Zusätzlich weist Tabelle 4 das Ergebnis der Analyse an verschiedenen als Funktion der Polymerisationsdauer entnommenen Proben aus.

Tabelle 4

| Polymerisationsdauer (h) | Feststoffgehalt (Gew.-%) | $\bar{d}_z$ (nm) | $\bar{M}_w$ | PDI |
|---|---|---|---|---|
| 1 | 3,3 | 189 | 32466 | 1,58 |
| 2 | 3,5 | 189 | - | - |
| 3 | 4,3 | 190 | - | - |
| 4 | 6,1 | 197 | - | - |
| 5 | 7,4 | 205 | 65573 | 1,65 |
| 6 | 8,7 | 206 | 76728 | 1,72 |
| 7 | 10,2 | 220 | - | - |
| 7,5 | 10,6 | 220 | 92649 | 1,80 |
| 24 | 13,1 | 225 | 153180 | 2,09 |

Vergleichsbeispiel

Wie Beispiel 3, anstelle des N-Oxyl-Radikalbildners A wurden jedoch 33 g Polystyrol verwendet, die durch anionische Polymerisation mittels n-Butyllithium in Cyclohexan in an sich bekannter Weise hergestellt wurden ($\bar{M}_w$=45350, $\bar{M}_w/\bar{M}_n$=1,15). Bereits nach 2 h Polymerisationsdauer betrug der PDI 2,53 bei $\bar{M}_w$= 111930. Nach 7 h Polymerisationsdauer betrug der PDI 4,11.

Beispiel 4

16,4 g des N-Oxyl-Radikalbildners A wurden mit 41 g Styrol, 41 g n-Butylacrylat, 2,05 g Emulgatorlösung 1 und 400 g Wasser unter Rühren vermischt. Anschließend wurde das Gemisch durch Anwendung von Ultraschall (Branson Sonifier II 450) zu einer wäßrigen Emulsion mit $\bar{d}_z$ = 205 nm homogenisiert. Anschließend wurde die erhaltene wäßrige Emulsion in einem gerührten 3 1-Druckkessel gegeben und dort mit 485 g Wasser verdünnt. Mittles molekularem Stickstoff wurde im Druckkessel ein Vordruck von 1 bar eingestellt und dann die wäßrige Emulsion auf 130°C erhitzt und während 25 h bei dieser Temperatur gehalten. Danach wurde das Reaktionsgemisch auf 25°C abgekühlt. Es wurde eine stabile wäßrige Polymerisatdispersion erhalten, die in Tabelle 5 charakterisiert ist. Zusätzlich weist

Tabelle 5 das Ergebnis der Analyse an verschiedenen als Funktion der Polymerisationsdauer entnommenen Proben aus.

Tabelle 5

| Polymerisationsdauer [h] | Feststoffgehalt (Gew.-%) | $\bar{d}_z$ (nm) | $\bar{M}_w$ | PDI |
|---|---|---|---|---|
| 3 | 2,6 | - | 46050 | 1,64 |
| 18 | 6,6 | - | 141800 | 2,66 |
| 25 | 7,1 | 213 | 153900 | 2,79 |

Beispiel 5

16,4 g des N-Oxyl-Radikalbildners A wurden mit 82 g Vinyltoluol, 2,05 g Emulgatorlösung 1 und 400 g Wasser unter Rühren vermischt. Anschließend wurde das Gemisch durch Anwendung von Ultraschall (Branson Sonifier II 450) zu einer wäßrigen Emulsion mit $\bar{d}_z$ = 194 nm homogenisiert. Anschließend wurde die erhaltene wäßrige Emulsion in einen gerührten 3 1-Druckkessel gegeben und dort mit 485 g Wasser verdünnt. Mittles molekularem Stickstoff wurde im Druckkessel ein Vordruck von 2 bar eingestellt und dann die wäßrige Emulsion auf 124°C erhitzt und während 42 h bei dieser Temperatur gehalten. Danach wurde das Reaktionsgemisch auf 25°C abgekühlt. Es wurde eine stabile wäßrige Polymerisatdispersion erhalten, die in Tabelle 6 charakterisiert ist. Zusätzlich weist Tabelle 6 das Ergebnis der Analyse an verschiedenen als Funktion der Polymerisationsdauer entnommenen Proben aus.

Tabelle 6

| Polymerisationsdauer [h] | Feststoffgehalt (Gew.-%) | $\bar{d}_z$ (nm) | $\bar{M}_w$ | PDI |
|---|---|---|---|---|
| 1 | 2,3 | - | - | - |
| 18 | 5,6 | - | - | - |
| 22 | 6,9 | - | - | - |
| 25 | 7,2 | - | - | - |
| 42 | 8,5 | 269 | 140000 | 2,24 |

Beispiel 6

16,4 g des N-Oxyl-Radikalbildners B wurden mit 24,6 g Styrol, 55,76 g n-Butylacrylat, 1,64 g Dicyclopentadienylacrylat, 2,05 g Emulgatorlösung 1 und 400 g Wasser unter Rühren vermischt. Anschließend wurde das Gemisch durch Anwendung von Ultraschall (Branson Sonifier II 450) zu einer wäßrigen Emulsion mit $\bar{d}_z$ = 171 nm homogenisiert. Anschließend wurde die erhaltene wäßrige Emulsion in einen gerührten 3 1-Druckkessel gegeben und dort mit 485 g Wasser verdünnt. Mittles molekularem Stickstoff wurde im Druckkessel ein Vordruck von 2 bar eingestellt und dann die wäßrige Emulsion auf 130°C erhitzt und während 24 h bei dieser Temperatur gehalten. Danach wurde das Reaktionsgemisch auf 25°C abgekühlt. Es wurde eine stabile wäßrige Polymerisatdispersion erhalten, die in Tabelle 7 charakterisiert ist. Zusätzlich weist Tabelle 7 das Ergebnis der Analyse an verschiedenen als Funktion der Polymerisationsdauer entnommenen Proben aus.

Tabelle 7

| Polymerisationsdauer [h] | Feststoffgehalt (Gew.-%) | $\bar{d}_z$ (nm) | Glasübergangstemperatur [°C] | $\bar{M}_w$ | PDI |
|---|---|---|---|---|---|
| 3 | 3,8 | | 9,85 | 129500 | 2,37 |
| 16 | 4,6 | | - | 141100 | 2,79 |
| 24 | 5,1 | 212 | - | Bestimmung wegen zu starker vernetzung nicht mehr möglich | |

Beispiel 7

16,4 g des N-Oxyl-Radikalbildners A wurden mit 82 g Styrol, 2,05 g Emulgatorlösung 1 und 400 g Wasser unter Rühren vermischt. Anschließend wurde das Gemisch durch Anwendung von Ultraschall (Branson Sonifier II 450) zu einer wäßrigen Emulsion mit $\bar{d}_z$ = 211 nm homogenisiert. Anschließend wurde die erhaltene wäßrige Emulsion in einen gerührten 3 1-Druckkessel gegeben und dort mit 485 g Wasser verdünnt. Mittles molekularem Stickstoff wurde im Druckkessel ein Vordruck von 1 bar eingestellt und dann die wäßrige Emulsion auf 130°C erhitzt und während 6 h bei dieser Temperatur gehalten. Im Anschluß daran wurden 38 g Butadien in den Druckkessel gegeben und die Polymerisation weitere 21 h bei 130°C und dem entsprechenden Überdruck fortgesetzt. Danach wurde das Reaktionsgemisch auf 25°C abgekühlt. Es wurde eine stabile wäßrige Polymerisatdispersion erhalten, die in Tabelle 8 charakterisiert ist. Zusätzlich weist Tabelle 8 das Ergebnis der Analyse an einer nach 6 h entnommenen Probe aus. TEM-Aufnamen an mit $OsO_4$ kontrastierten Schnitten des Films der resultierenden wäßrigen Polymerisatdispersion weisen innerhalb der dispergierten Polymerisatteilchen die erwartete Block-Copolymerisatbildung aus.

Tabelle 8

| Polymerisationsdauer [h] | Feststoffgehalt (Gew.-%) | $\bar{d}_z$ (nm) | Glasübergangstemperatur [°C] | $\bar{M}_w$ | PDI |
|---|---|---|---|---|---|
| 6 | 5,4 | 240 | 97,8 | 92101 | 1,76 |
| 27 | 7,0 | 260 | 8,6//84,4 | 259840 | 3,86 |

Beispiel 8

11,3 g des N-Oxyl-Radikalbildners B wurden mit 56,50 g Styrol, 1,51 g Emulgatorlösung 1 und 275,4 g Wasser unter Rühren vermischt. Anschließend wurde das Gemisch durch Anwendung von Ultraschall (Branson Sonifier II 450) zu einer wäßrigen Emulsion mit $\bar{d}_z$ = 229 nm homogenisiert. Anschließend wurde die erhaltene wäßrige Emulsion in einen gerührten 3 1-Druckkessel gegeben und mittels molekularem Stickstoff in selbigem ein Vordruck von 2 bar eingestellt. Danach wurde die wäßrige Emulsion auf 130°C erhitzt und 4 h bei dieser Temperatur gehalten. Anschließend wurden 38 g Butadien in den Druckkessel gegeben und die Polymerisation weitere 20 h bei 130°C und dem entsprechenden Überdruck fortgesetzt. Danach wurde das Reaktionsgemisch auf 25°C abgekühlt. Es wurde eine stabile wäßrige Polymerisatdispersion erhalten, die in Tabelle 9 charakterisiert ist. Zusätzlich weist Tabelle 9 das Ergebnis der Analysen an nach 4 h und 7 h Polymerisationsdauer entnommenen Proben aus.

Tabelle 9

| Polymerisationsdauer [h] | Feststoffgehalt (Gew.-%) | $\bar{d}_z$ (nm) | Glasübergangstemperatur [°C] | $\bar{M}_w$ | PDI |
|---|---|---|---|---|---|
| 4 | 4,7 | - | 103,6 | 63290 | 1,43 |
| 7 | 5,3 | - | 84,8 | 75840 | 1,51 |
| 24 | 5,8 | 268 | 74,6 | 127200 | 2,00 |

Beispiel 9

11,3 g des N-Oxyl-Radikalbildners B wurden mit 56,50 g Styrol, 1,41 g Emulgatorlösung 1 und 275,4 g Wasser unter Rühren vermischt. Anschließend wurde das Gemisch durch Anwendung von Ultraschall (Branson Sonifier II 450) zu einer wäßrigen Emulsion mit $\bar{d}_z$ = 229 nm homogenisiert.

Danach wurde die erhaltene wäßrige Emulsion in einen gerührten 3 1-Druckkessel gegeben und mittels molekularem Stickstoff in selbigem ein Vordruck von 2 bar eingestellt. Dann wurde die wäßrige Emulsion auf 130°C erhitzt und 4 h bei dieser Temperatur gehalten. Danach wurden 53 g Butadien in den Druckkessel geben und die Polymerisation weitere 20 h bei 130°C und dem entsprechenden Überdruck fortgesetzt. Dann wurde mittels molekularem Stickstoff ein Druck von 10 bar eingestellt und anschließend auf 4 bar entspannt (dieser Vorgang wurde 9mal wiederholt). Danach wurden 80 g Styrol in den Druckkessel gegeben und die Polymerisation für weitere 4 h bei 130°C und einem Vordruck von 2 bar entsprechenden Überdruck fortgesetzt. Dann wurde das Reaktionsgemisch auf 25°C abgekühlt.

Es wurde eine stabile wäßrige Polymerisatdispersion erhalten, die in Tabelle 10 charakterisiert ist.

Zusätzlich weist Tabelle 10 das Analyseergebnis nach verschiedenen Polymerisationsdauern aus.

Tabelle 10

| Polymerisationsdauer [h] | Feststoffgehalt (Gew.-%) | $\bar{d}_z$ (nm) | Glasübergangstemperatur [°C] | $\bar{M}_w$ | PDI |
|---|---|---|---|---|---|
| 3,5 | 3,9 | 148 | 84,9 | 64 920 | 1,50 |
| 6,5 | 4,6 | 220 | 64,8 | 83 060 | 1,61 |
| 23,5 | 6,7 | 234 | 64,8 | - | - |
| 27,5 | 9,1 | 258 | 71,5 | 366 500 | 3,88 |

Der Film der erhaltenen wäßrigen Polymerisatdispersion war in Tetrahydrofuran vollständig löslich, was einen allenfalls geringen Vernetzungsgrad auswies.

Beispiel 10

16,4 g des N-Oxyl-Radikalbildners B wurden mit 82 g Styrol, 2,05 g Emulgatorlösung 1 und 400 g Wasser unter Rühren vermischt. Anschließend wurde das Gemisch durch Anwendung von Ultraschall (Branson Sonifier II 450) zu einer wäßrigen Emulsion mit $\bar{d}_z$ = 231 nm homogenisiert. Die erhaltene wäßrige Emulsion wurde in einen gerührten 3 1-Druckkessel gegeben und in selbigem mit 485 g Wasser verdünnt. Dann wurde im Druckkessel mittels molekularem Stickstoff ein Vordruck von 1 bar eingestellt und die wäßrige Emulsion auf 130°C erhitzt und 4 h bei dieser Temperatur gehalten. Danach wurden 38 g n-Butylacrylat in den Druckkessel gegeben und die Polymerisation für weitere 2 h bei 130°C und dem entsprechenden Überdruck fortgesetzt. Abschließend wurde das Reaktionsgemisch auf 25°C abgekühlt. Es wurde eine stabile wäßrige Polymerisatdispersion erhalten, die in Tabelle 11 charakterisiert ist. Zusätzlich weist Tabelle 11 das Analysenergebnis nach verschiedenen Polymerisationsdauern aus.

Tabelle 11

| Polymerisationsdauer [h] | Feststoffgehalt (Gew.-%) | $\bar{d}_z$ (nm) | Glasübergangstemperatur [°C] | $\bar{M}_w$ | PDI |
|---|---|---|---|---|---|
| 4 | 4,0 | - | 103,6 | 68620 | 1,38 |
| 5 | - | - | 98 | 71730 | 1,41 |
| 24 | 5,3 | 255 | 90,8//26,8 | 128700 | 1,89 |

Beispiel 11

40 g des N-Oxyl-Radikalbildners B wurden mit 93 g Styrol, 2,66 g Emulgatorlösung 1 und 645,1 g Wasser unter Rühren vermischt. Anschließend wurde das Gemisch durch Anwendung von Ultraschall (Branson Sonifier II 450) zu einer wäßrigen Emulsion mit $\bar{d}_z$ = 200 nm homogenisiert. Die erhaltene wäßrige Emulsion wurde in einen gerührten 3 1-Druckkessel gegeben und in selbigem mit molekularem Stickstoff ein Vordruck von 5 bar eingestellt. Dann wurde die wäßrige Emulsion auf 130°C erhitzt und 2 h bei dieser Temperatur gehalten. Anschließend wurden 118 g n-Butylacrylat, 20,05 g Styrol und 2,76 g Emulgatorlösung 1 ins Druckgefäß gegeben und die Polymerisation für weitere 4 h bei 130°C und dem entsprechenden Überdruck fortgesetzt. Abschließend wurde das Reaktionsgemisch auf 25°C abgekühlt. Es wurde eine stabile wäßrige Polymerisatdispersion erhalten, die in Tabelle 12 charakterisiert ist. Zusätzlich weist Tabelle 12 das Analyseergebnis nach 2 h Polymerisationsdauer aus.

Tabelle 12

| Polymerisationsdauer [h] | Feststoffgehalt (Gew.-%) | $\bar{d}_z$ (nm) | Glasübergangstemperatur [°C] | $\bar{M}_w$ | PDI |
|---|---|---|---|---|---|
| 2 | 4,5 | 223 | 102 | 48720 | 1,41 |
| 6 | 7,6 | 253 | 19,5//88,1 | 91340 | 1,71 |

Beispiel 12

35,55 g des N-Oxyl-Radikalbildners B wurden mit 82,65 g Styrol, 2,96 g Emulgatorlösung 1 und 572,15 g

Wasser unter Rühren vermischt. Anschließend wurde das Gemisch durch Anwendung von Ultraschall (Branson Sonifier II 450) zu einer wäßrigen Emulsion mit $\bar{d}_z$ = 212 nm homogenisiert. Die erhaltene wäßrige Emulsion wurde in einen gerührten 3-1-Druckkessel gegeben und in selbigem mit molekularem Stickstoff ein Vordruck von 5 bar eingestellt. Dann wurde die wäßrige Emulsion auf 130°C erhitzt und 3 h bei dieser Temperatur gehalten. Anschließend wurden 104,9 g n-Butylacrylat, 17,82 g Styrol und 3,07 g Emulgatorlösung 1 ins Druckgefäß gegeben und die Polymerisation für weitere 4 h bei 130°C und dem entsprechenden Überdruck fortgesetzt. Dann wurde eine Lösung von 0,45 g Natriumperoxodisulfat in 15 g Wasser ins Druckgefäß gegeben und 1,5 h bei 130°C und dem entsprechenden Überdruck nachpolymerisiert. Abschließend wurde das Reaktionsgemisch auf 25°C abgekühlt. Es wurde eine stabile wäßrige Polymerisatdispersion erhalten, die in Tabelle 13 charakterisiert ist und einen mittels Gaschromatographie bestimmten Restmonomerengehalt von < 100 Gew.ppm aufwies, was einen nahezu quantitativen Polymerisationsumsatz anzeigte. Zusätzlich weist Tabelle 13 das Analysenergebnis nach 3 und 7 Stunden Polymerisationsdauer aus (während nach 7 h Polymerisationsdauer die Molekulargewichtsverteilung noch monomodal war, war sie nach 8,5 h bimodal, mit einem ersten Maximum bei etwa 90000 g/mol und einem zweiten Maximum bei etwa 600000 g/mol).

Tabelle 13

| Polymerisationsdauer [h] | Feststoffgehalt (Gew.-%) | $\bar{d}_z$ (nm) | Glasübergangstemperatur [°C] | $\bar{M}_w$ | PDI |
|---|---|---|---|---|---|
| 3 | 10,3 | 271 | 97,3 | 51750 | 1,42 |
| 7 | 13,9 | 269 | 16,7//87,8 | 86370 | 1,68 |
| 8,5 | 18,5 | 265 | 14,3//84,6 | 153820 | 2,72 |

## Patentansprüche

1. Verfahren der radikalisch initiierten wäßrigen Emulsionspolymerisation zur Herstellung einer wäßrigen Polymerisatdispersion, bei dem man wenigstens eine ethylenisch ungesättigte Gruppe aufweisende Verbindungen mittels Dispergiermittel in wäßrigem Medium emulgiert und im Beisein eines stabilen N-Oxyl-Radikals radikalisch polymerisiert, **dadurch gekennzeichnet, daß** man aus einem Gemisch, umfassend

   a) die wenigstens eine ethylenisch ungesättigte Gruppe aufweisenden Verbindungen, wenigstens einen radikalischen Polymerisationsinitiator und wenigstens ein stabiles N-Oxyl-Radikal,
   oder

   b) die wenigstens eine ethylenisch ungesättigte Gruppe aufweisenden Verbindungen und wenigstens eine Verbindung, die unter der Einwirkung von Wärme in ein stabiles N-Oxyl-Radikal und in einen die Polymerisation initiierenden radikalischen Partner zerfällt,

   eine wäßrige Emulsion erzeugt, deren disperse Phase hauptsächlich aus Tröpfchen eines Durchmessers < 500 nm besteht, und die wäßrige Emulsion durch Temperaturerhöhung polymerisiert.

2. Verfahren nach Anspruch 1, **dadurch gekennzeichnet, daß** die wässrige Emulsion wenigstens eine Verbindung enthält, deren Löslichkeit in Wasser, bezogen auf die gesättigte wässrige Lösung, bei 25°C und 1 atm weniger als 0,001 Gew.-% beträgt.

3. Wäßrige Polymerisatdispersion erhältlich nach einem Verfahren gemäß Anspruch 1 oder 2.

## Claims

1. A process of free-radically initiated aqueous emulsion polymerization for preparing an aqueous polymer dispersion, where compounds having at least one ethylenically unsaturated group are emulsified in an aqueous medium by means of dispersants and are free-radically polymerized in the presence of a stable N-oxyl radical, which comprises using a mixture composed of

   a) the compounds having at least one ethylenically unsaturated group, together with at least one free-radical polymerization initiator and at least one stable N-oxyl radical,

or

b) the compounds having at least one ethylenically unsaturated group, and at least one compound which under the action of heat breaks down into a stable N-oxyl radical and into a free-radical partner which initiates the polymerization,

to produce an aqueous emulsion whose disperse phase consists predominantly of droplets with a diameter ≤ 500 nm and polymerizing the aqueous emulsion by raising the temperature.

**2.** A process as claimed in claim 1, wherein the aqueous emulsion includes at least one compound whose solubility in water, based on the saturated aqueous solution, at 25°C and 1 atm is less than 0.001% by weight.

**3.** An aqueous polymer dispersion obtainable by a process as claimed in claim 1 or 2.

## Revendications

**1.** Procédé de polymérisation en émulsion aqueuse, amorcée par voie radicalaire, pour la préparation d'une dispersion aqueuse de polymère, dans lequel on émulsionne dans un milieu aqueux des composés présentant au moins un groupe éthyléniquement insaturé au moyen d'agents dispersants et, en présence d'un radical N-oxyle stable, on effectue une polymérisation radicalaire, **caractérisé en ce que**, à partir d'un mélange comprenant :

a) les composés présentant au moins un groupe éthyléniquement insaturé, au moins un agent d'amorçage de polymérisation radicalaire et au moins un radical N-oxyle stable,

ou

b) les composés présentant au moins un groupe éthyléniquement insaturé et au moins un composé, qui, sous l'action de la chaleur, se décompose en un radical N-oxyle stable et en un partenaire radicalaire qui amorce la polymérisation,

on produit une émulsion aqueuse dont la phase dispersée est principalement constituée de gouttelettes d'un diamètre ≤ 500 nm, et **en ce qu'**on polymérise l'émulsion aqueuse par augmentation de température.

**2.** Procédé suivant la revendication 1, **caractérisé en ce que** l'émulsion aqueuse contient au moins un composé dont la solubilité dans l'eau, par rapport à la solution aqueuse saturée, est inférieure à 0,001% en poids à 25°C et à 1 atmosphère.

**3.** Dispersion aqueuse de polymère que l'on peut obtenir suivant un procédé selon l'une des revendications 1 et 2.